(19) Europäisches Patentamt
European Patent Office
Office européen des brevets

(11) **EP 2 028 014 B1**

(12) **EUROPEAN PATENT SPECIFICATION**

(45) Date of publication and mention
of the grant of the patent:
**26.01.2011 Bulletin 2011/04**

(51) Int Cl.:
***B41J 2/45*** *(2006.01)*

(21) Application number: **08014688.9**

(22) Date of filing: **19.08.2008**

(54) **Line head and image forming apparatus using the same**

Zeilenkopf und Bilderzeugungsvorrichtung damit

Tête de ligne et appareil de formation d'images l'utilisant

(84) Designated Contracting States:
**DE FR GB**

(30) Priority: **20.08.2007 JP 2007213530**
**19.05.2008 JP 2008130590**

(43) Date of publication of application:
**25.02.2009 Bulletin 2009/09**

(73) Proprietor: **Seiko Epson Corporation**
**Tokyo 163-0811 (JP)**

(72) Inventors:
• **Sowa, Takeshi**
**Suwa-shi**
**Nagano 392-8502 (JP)**
• **Nomura, Yujiro**
**Suwa-shi**
**Nagano 392-8502 (JP)**
• **Koizumi, Ryuta**
**Suwa-shi**
**Nagano 392-8502 (JP)**
• **Ikuma, Ken**
**Suwa-shi**
**Nagano 392-8502 (JP)**

(74) Representative: **HOFFMANN EITLE**
**Patent- und Rechtsanwälte**
**Arabellastraße 4**
**81925 München (DE)**

(56) References cited:
JP-A- 2007 086 022    US-A- 5 469 290
US-A- 5 539 444    US-A1- 2003 231 402
US-A1- 2005 179 962

**Description**

BACKGROUND

1. Technical Field

The present invention relates to a line head and an image forming apparatus using the same and in particular, to a line head that forms an imaging spot row by projecting a light-emitting element row onto an irradiated surface using a microlens array and an image forming apparatus using the same.

2. Related Art

JP-A-2-4546 proposes an optical writing line head, in which a plurality of LED array chips are disposed in the LED array direction and the LED array of each LED array chip is projected onto a photoconductor in an enlarged manner by a positive lens disposed corresponding thereto such that images of light-emitting dots at the ends of the LED array chips adjacent on the photoconductor are formed adjacent to each other with the same pitch as a pitch between images of light-emitting dots of the same LED array chips, and an optical reading line head in which the optical path is oppositely set.

Furthermore, JP-A-6-344596 proposes making the focal depth large by configuring a positive lens with two lenses in the same arrangement as disclosed in JP-A-2-4546 and making projected beams approximately parallel beams.

Furthermore, JP-A-6-278314 proposes an optical writing line head in which LED array chips are disposed in two rows at distances therebetween, the repeat phase is shifted by a half period, and positive lens arrays are disposed in two rows in a condition where each positive lens corresponds to each LED array chip such that images of the light-emitting dot array on a photoconductor are aligned.

In the above known techniques, even if images of the light-emitting dot array are aligned on an ideal image surface at equal pitches, the positional deviation of light-emitting dots on the photoconductor occurs when the image surface moves forward or backward in the optical axis direction due to vibration of the photoconductor, for example. As a result, unevenness in the pitch between scanning lines drawn by relative movement of the light-emitting dot array in the sub-scanning direction occurs (pitch unevenness in the main scanning direction).

In addition, if an angle of view of each positive lens increases, a decrease in the peripheral light amount becomes large according to a fourth power of cosine rule (shading). In order to prevent the concentration unevenness of a printing image caused by the shading, it is necessary to make constant the light amount of each pixel (light-emitting dot image) on the image surface. In order to do so, however, the shading should be corrected by changing the light amount of the light source (light-emitting dot) for every light-emitting dot. However, the emission intensity of a light source pixel (light-emitting dot) affects a life characteristic. Accordingly, if the shading of an optical system becomes large, the light amount unevenness of the light-emitting dot pitch occur temporally even if the uniform image surface light amount is obtained in an early stage by adjusting the light amount for every light-emitting dot. This causes the image concentration unevenness.

US 5 539 444 discloses a scanning head for an optical recording device having a positive lens system with two lenses, a light emitter array corresponding to the lens system, and an aperture plate at the local point on the object-side of the system.

SUMMARY

An advantage of some aspects of the invention is to make sure that unevenness caused by the positional deviation of light-emitting dot images does not occur in an optical writing line head, in which a plurality of light-emitting elements are arrayed in rows corresponding to each lens of a plurality of positive lens arrayed in a line shape, even if a writing surface moves in the optical axis direction. Another advantage of some aspects of the invention is to prevent concentration unevenness, which is caused by shading, between imaging spots formed by each lens.

Still another advantage of some aspects of the invention is that it provides an image forming apparatus using such an optical writing line head and an optical reading line head in which the optical path is oppositely set.

According to an aspect of the invention, a line head includes: a positive lens system having two lenses with positive refractive power; a lens array in which a plurality of the positive lens systems are arrayed in a first direction; a light emitter array in which a plurality of light-emitting elements are arrayed on an object side of the lens array so as to correspond to the one positive lens system; and an aperture plate that forms an aperture diaphragm at the position of an object-side focal point of the positive lens system. An object-side surface of an object-side lens of the positive lens system is positioned within a range of $\pm 10\%$ of a total focal length of the positive lens system from the object-side focal point.

By adopting such a configuration, unevenness caused by the positional deviation of light-emitting dot images does not occur even if a writing surface moves in the optical axis direction, and an effect of shading can be reduced by making small an angle of view of light incident on the positive lens system from the plurality of light-emitting elements. As a result, deterioration of an image formed can be prevented.

.

By adopting such a configuration, unevenness caused by the positional deviation of light-emitting dot images does not substantially occur even if the writing surface moves in the optical axis direction, and the effect of shading can be reduced by making small the angle of view of light incident on the positive lens system from the plurality of light-emitting elements. As a result, deterioration of an image formed can be prevented.

Furthermore, the lenses may be configured to include a lens group.

By adopting such a configuration, it becomes easy not only to manufacture each lens array but also to perform aberration correction.

Furthermore, an image-side surface of the object-side lens of the two lenses may be a flat surface.

By adopting such a configuration, a distance from a front side principal plane of the image-side lens to a rear side principal plane of the object-side lens can be further increased. As a result, since the angle of view can be made smaller, the effect of shading can be further reduced. In addition, as compared with a lens both surfaces of which have curvatures, the above lens is advantageous in that manufacturing becomes easy since only one surface of the object-side lens is formed as a curved surface.

Furthermore, preferably, at least the object-side surface of the object-side lens of the positive lens system is a convex surface, and a portion including a surface apex of the convex surface is disposed to be hidden in an opening of the aperture plate.

By adopting such a configuration, a distance from a front side principal plane of the image-side lens to a rear side principal plane of the object-side lens can be further increased. As a result, since the angle of view can be made smaller, the effect of shading can be further reduced.

In this case, the aperture plate may be configured by integrally forming a light shielding member on an object-side surface of the lens array.

In such a configuration, positioning and assembly of the aperture plate become easy by integrally forming the aperture plate on the lens surface. In addition, deviation of the center of a diaphragm and an optical axis of a lens caused by thermal expansion and the like can be suppressed.

Furthermore, it is preferable that at least an image-side surface of an image-side lens of the positive lens system be a flat surface.

By adopting such a configuration, it becomes possible to make an emission surface of a lens, which is closest to the image surface, a flat surface. As a result, foreign matters, such as dust or toner, adhering onto the emission surface can be easily cleaned, which improves the cleaning efficiency.

Furthermore, it is preferable that the shape of the aperture diaphragm be a shape of restricting at least the aperture diameter in the first direction.

By adopting such a configuration, it is possible to meet at least the main scanning direction in which the positional deviation of an off-axis imaging spot is a problem.

Furthermore, it is preferable that the plurality of light-emitting elements form a plurality of light-emitting element rows arrayed in a second direction perpendicular to the first direction.

By adopting such a configuration, it is possible to meet image formation with the high density of imaging spots.

Furthermore, it is preferable that the plurality of light-emitting elements be arrayed to form light emitter groups at distances therebetween in the first direction.

By adopting such a configuration, it is possible to meet image formation with the high density of imaging spots. In addition, it can be avoided that an image of an end light-emitting dot within each of the plurality of light-emitting elements causes a decrease in the light amount due to an effect of eclipse.

Furthermore, it is preferable that the light-emitting elements be organic EL elements.

By adopting such a configuration, it is possible to meet in-plane uniform image formation.

Furthermore, it is preferable that the light-emitting elements be LEDs.

By adopting such a configuration, it is also possible to meet a line head using an LED array.

In addition, according to another aspect of the invention, an image forming apparatus includes: at least two image forming stations each of which has a charging unit, the line head described above, a developing unit, and a transfer unit disposed around an image carrier. Tandem-type image formation is performed by causing a transfer medium to pass through each station.

By adopting such a configuration, it is possible to form the image forming apparatus, such as a printer, which is small, has high resolution, and has little deterioration of an image.

**EP 2 028 014 B1**

BRIEF DESCRIPTION OF THE DRAWINGS

The invention will be described with reference to the accompanying drawings, wherein like numbers reference like elements.

Fig. 1 is a perspective view illustrating a portion corresponding to one microlens of a line head according to an embodiment of the invention.

Fig. 2 is a perspective view illustrating a portion corresponding to one microlens of a line head according to an embodiment of the invention.

Fig. 3 is a perspective view illustrating a portion corresponding to one microlens of a line head according to an embodiment of the invention.

Fig. 4 is an explanatory view illustrating the correspondence relationship between a light emitter array and a microlens with minus optical magnification in an embodiment of the invention.

Fig. 5 is an explanatory view illustrating an example of a memory table of a line buffer in which image data is stored.

Fig. 6 is an explanatory view illustrating a state where imaging spots are formed on the same row in the main scanning direction by even-numbered light-emitting elements and odd-numbered light-emitting elements.

Fig. 7 is an explanatory view schematically illustrating an example of a light emitter array used as a line head.

Fig. 8 is an explanatory view illustrating the imaging position when output light of each light-emitting element is irradiated onto an exposure surface of an image carrier through a microlens in the configuration shown in Fig. 7.

Fig. 9 is an explanatory view illustrating a state of formation of imaging spots in the sub-scanning direction in Fig. 8.

Fig. 10 is an explanatory view illustrating an example where imaging spots are formed to be inverted in the main scanning direction of the image carrier in the case where a plurality of microlenses are arrayed.

Fig. 11 is a cross-sectional view schematically illustrating the entire configuration of a first example of an image forming apparatus, which uses an electrophotographic process, according to an embodiment of the invention.

Figs. 12A and 12B are views for explaining the basic principle in some embodiments according to the invention.

Fig. 13 is a view illustrating the definition of reference numerals of parameters.

Fig. 14 is a view illustrating an angle of view of an end light-emitting element when a lens system configured to include a first positive lens and a second positive lens is telecentric on the image side.

Fig. 15 is a view illustrating the configuration in the case where an optical system according to an embodiment of the invention is formed by using a thin lens system.

Fig. 16 is a perspective view illustrating a broken part of the configuration of an optical writing line head in the first example of the invention.

Fig. 17 is a cross-sectional view taken along the sub-scanning direction of Fig. 16.

Fig. 18 is a plan view illustrating the arrangement of a light emitter array and a microlens array in the case shown in Fig. 16.

Fig. 19 is a view illustrating the correspondence relationship between one microlens and a light emitter block corresponding thereto.

Fig. 20 is a plan view illustrating an aperture plate disposed corresponding to a light emitter block of a light emitter array.

Fig. 21 is a view illustrating an opening of an aperture plate with respect to one light emitter block.

Fig. 22 is a view corresponding to Fig. 18 in the case of forming a light emitter block by arraying light-emitting elements in a shape of a long row in the main scanning direction and controlling emission of a part of the light-emitting elements.

Fig. 23 is a view illustrating an example where the number of light-emitting elements included in a light emitter block is increased so that rows of imaging spots adjacent on an image carrier are exposed to overlap each other.

Fig. 24 is a cross-sectional view taken along the main scanning direction in the case where a microlens array is configured to include two microlens arrays.

Figs. 25A and 25B are cross-sectional views taken along the main scanning direction and the sub-scanning direction illustrating an optical system corresponding to one microlens in a first example.

Figs. 26A and 26B are cross-sectional views taken along the main scanning direction and the sub-scanning direction illustrating an optical system corresponding to one microlens in a second example.

Figs. 27A and 27B are cross-sectional views taken along the main scanning direction and the sub-scanning direction illustrating an optical system corresponding to one microlens in a third example.

Fig. 28 is a cross-sectional view taken along the main scanning direction in an example of integrally forming an aperture on an object-side surface of a first microlens array that forms a lens array of a microlens in the third example.

Figs. 29A and 29B are cross-sectional views taken along the main scanning direction and the sub-scanning direction illustrating an optical system corresponding to one microlens in a fourth example.

Fig. 30 is a cross-sectional view taken along the main scanning direction in an example where a flare aperture plate is disposed apart from an aperture plate in an optical system of an optical writing line head according to an embodiment of the invention.

DESCRIPTION OF EXEMPLARY EMBODIMENTS

Before explaining an optical system of a line head according to an embodiment of the invention in detail, the arrangement and light emission timing of light-emitting elements of the line head will be briefly described.

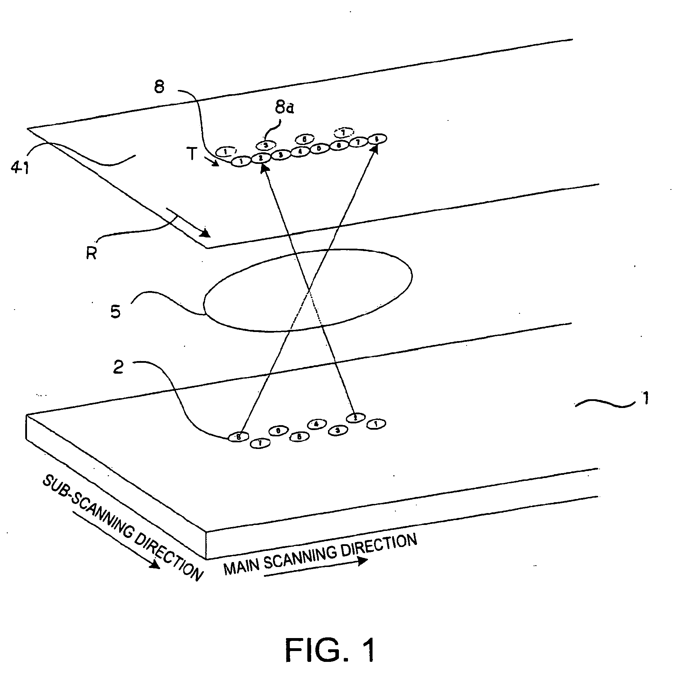

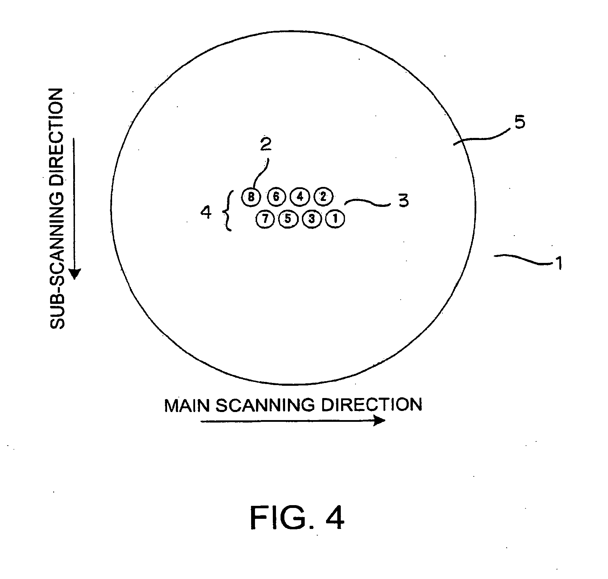

Fig. 4 is an explanatory view illustrating the correspondence relationship between a light emitter array 1 and a microlens 5 with minus optical magnification in an embodiment of the invention. In the line head according to the present embodiment, two rows of light-emitting elements correspond to one microlens 5. Here, since the microlens 5 is an imaging device with minus optical magnification (inverted imaging), the positions of the light-emitting elements are inverted in the main scanning direction and the sub-scanning direction. That is, in the configuration shown in Fig. 1, even-numbered light-emitting elements 8, 6, 4, and 2 are arrayed on an upstream side (first row) in the movement direction of an image carrier and odd-numbered light-emitting elements 7, 5, 3, and 1 are arrayed on the downstream side (second row). In addition, a light-emitting element with a large number is arrayed at the head side in the main scanning direction.

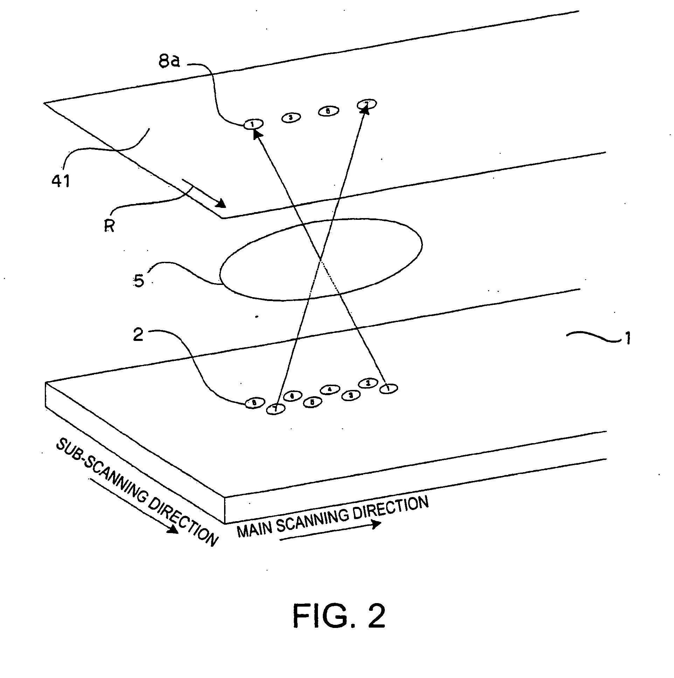

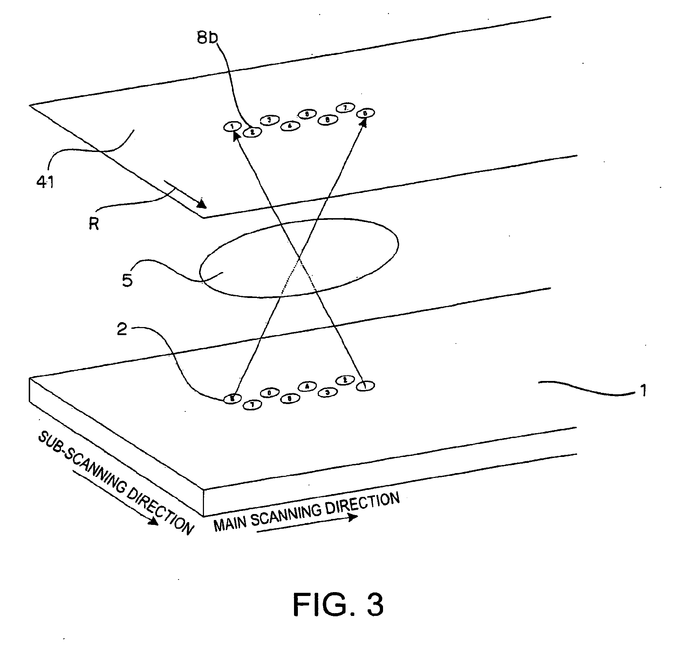

Figs. 1 to 3 are perspective views illustrating a portion corresponding to one microlens of the line head according to the present embodiment. As shown in Fig. 2, an imaging spot 8a of an image carrier 41 corresponding to the odd-numbered light-emitting element 2 arrayed on the downstream side of the image carrier 41 is formed at the position inverted in the main scanning direction. 'R' refers to the movement direction of the image carrier 41. Furthermore, as shown in Fig. 3, an imaging spot 8b of the image carrier 41 corresponding to the even-numbered light-emitting element 2 arrayed on the upstream side (first row) of the image carrier 41 is formed at the downstream position inverted in the sub-scanning direction. However, in the main scanning direction, the positions of imaging spots from the head side correspond in order by numbers of the light-emitting elements 1 to 8. Accordingly, in this example, it can be seen that the imaging spots can be formed on the same row in the main scanning direction by adjusting the timing of formation of imaging spots in the sub-scanning direction of the image carrier.

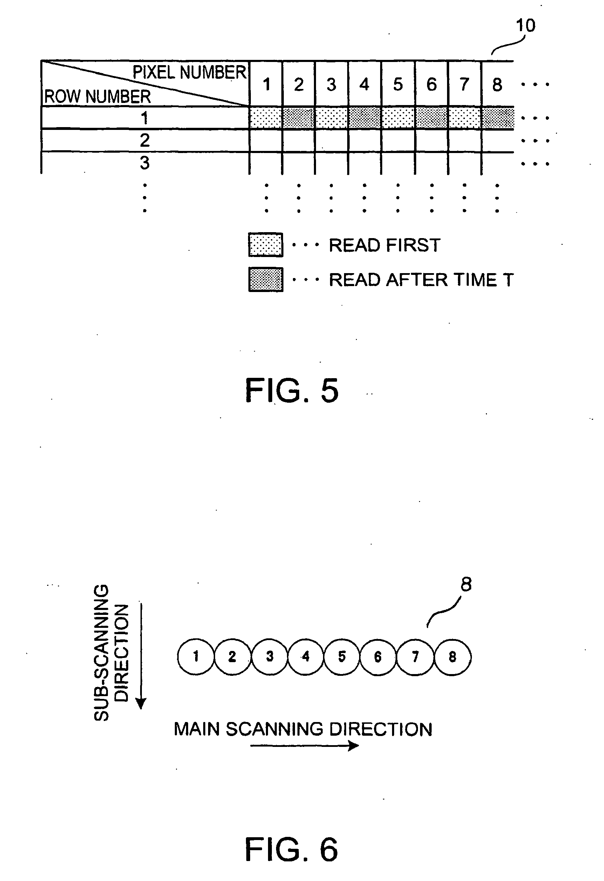

Fig. 5 is an explanatory view illustrating an example of a memory table 10 of a line buffer in which image data is stored. The memory table 10 shown in Fig. 5 stores the image data therein in a state where the numbers of the light-emitting elements shown in Fig. 4 are inverted in the main scanning direction. Referring to Fig. 5, first image data 1, 3, 5, and 7 corresponding to the light-emitting elements on the upstream side (first row) of the image carrier 41 are first read among the image data stored in the memory table 10 of the line buffer to make the light-emitting elements emit light. Then, after time T has elapsed, second image data 2, 4, 6, and 8 corresponding to the light-emitting elements on the downstream side (second row) of the image carrier 41 stored in the memory address are read to make the light-emitting elements emit light. In this manner, as shown by the position indicated by 8 of Fig. 6, the imaging spots on the first row of the image carrier and the imaging spots on the second row are formed on the same row in the main scanning direction.

Fig. 1 is a perspective view conceptually illustrating an example of forming imaging spots by reading image data at the timing shown in Fig. 5. As already described with reference to Fig. 5, the light-emitting elements on the upstream side (first row) of the image carrier 41 are first made to emit light, forming imaging spots on the image carrier 41. Then, the odd-numbered light-emitting elements on the downstream side (second row) of the image carrier 41 are made to emit light after the predetermined time T has passed, forming imaging spots on the image carrier. In this case, the imaging spots formed by the odd-numbered light-emitting elements are not formed at the positions indicated by 8a described in Fig. 2, but formed at the positions indicated by 8 on the same row in the main scanning direction as shown in Fig. 6.

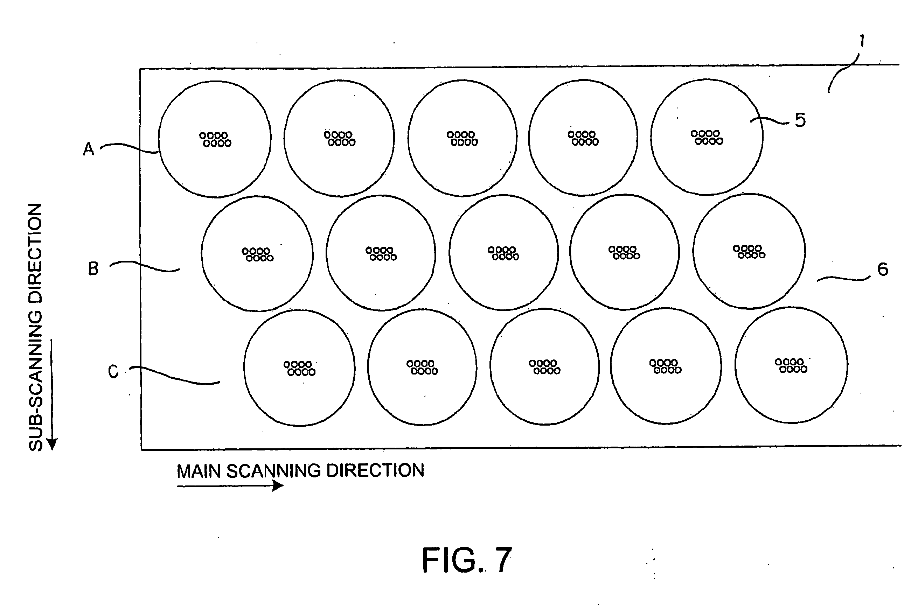

Fig. 7 is an explanatory view schematically illustrating the outline of an example of a light emitter array used as a line head. Referring to Fig. 7, in the light emitter array 1, a plurality of light-emitting element rows 3 each of which has the plurality of light-emitting elements 2 arrayed in the main scanning direction are provided in the sub-scanning direction, such that a light emitter block 4 (refer to Fig. 4) is formed. In the example shown in Fig. 7, two rows of light-emitting element rows 3 each of which has four light-emitting elements 2 arrayed in the main scanning direction are formed in the sub-scanning direction in the light emitter block 4 (refer to Fig. 4). The plurality of light emitter blocks 4 are disposed in the light emitter array 1, and each light emitter block 4 is disposed corresponding to the microlens 5.

The plurality of microlenses 5 are provided in the main scanning direction and sub-scanning direction of the light emitter array 1 to thereby form a microlens array (MLA) 6. The MLAs 6 are arrayed in a state where the head positions thereof in the main scanning direction are shifted from each other in the sub-scanning direction. Such arrangement of the MLA 6 corresponds to a case in which the light-emitting elements are provided in the light emitter array 1 in a zigzag manner. In the example shown in Fig. 7, the MLAs 6 are disposed in three rows in the sub-scanning direction, and unit blocks 4 corresponding to the positions of the three rows of MLAs 6 in the sub-scanning direction thereof are classified into a group A, a group B, and a group C for the convenience of explanation.

As described above, in the case where the plurality of light-emitting elements 2 are disposed in the microlens 5 having minus optical magnification and the plurality of rows of lenses are arrayed in the sub-scanning direction, it is necessary to perform the following image data control in order to form imaging spots arrayed in a row in the main scanning direction of the image carrier 41. That is, (1) inversion in the sub-scanning direction, (2) inversion in the main scanning direction, (3) adjustment of light emission timing of a plurality of rows of light-emitting elements in a lens, and (4) adjustment of light emission timing of light-emitting elements between groups are needed.

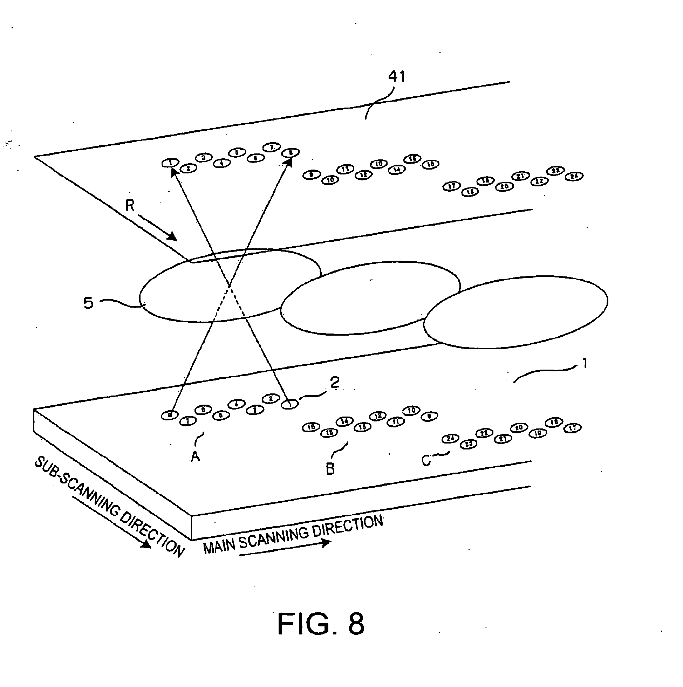

Fig. 8 is an explanatory view illustrating the imaging position when output light of each light-emitting element 2 is irradiated onto an exposure surface of an image carrier through the microlens 5 in the configuration shown in Fig. 7. In Fig. 8, the unit blocks 4 classified into the group A, the group B, and the group C are disposed in the light emitter array 1, as earlier described in Fig. 7. Light-emitting element rows of each of the unit blocks 4 of the group A, group B, and group C are divided into an upstream side (first row) and a downstream side (second row) of the image carrier 41, and even-numbered light-emitting elements are assigned for the first row and odd-numbered light-emitting elements are assigned for the second row.

In the case of the group A, imaging spots are formed at the positions of the image carrier 41 inverted in the main scanning direction and the sub-scanning direction by operating each light-emitting element 2 as already described with reference to Figs. 1 to 3. In this manner, on the image carrier 41, the imaging spots are formed on the same row in the main scanning direction in the order of 1 to 8. Then, the image carrier 41 is moved in the sub-scanning direction for a predetermined time to execute processing for the group B in the same manner. Then, the image carrier 41 is moved in the sub-scanning direction for a predetermined time to execute processing for the group C. As a result, the imaging spots based on the input image data are formed on the same row in the main scanning direction in the order of 1 to 24.

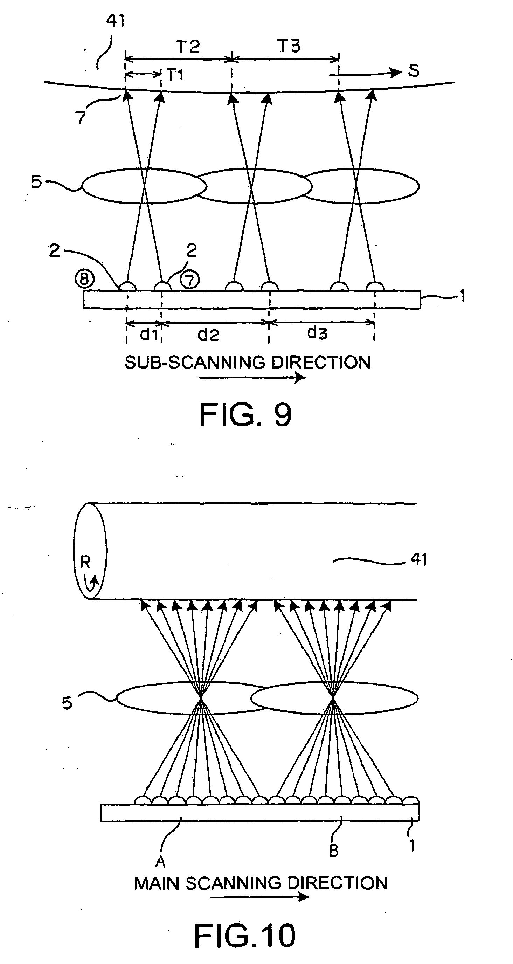

Fig. 9 is an explanatory view illustrating a state of formation of imaging spots in the sub-scanning direction in Fig. 8. S is the movement speed of the image carrier 41, d1 is a distance between light-emitting elements on the first and second rows of the group A, d2 is a distance between a light-emitting element on the second row of the group A and a light-emitting element on the second row of the group B, d3 is a distance between a light-emitting element on the second row of the group B and a light-emitting element on the second row of the group C, T1 is a time until a light-emitting element on the first row emits light after emission of the light-emitting element on the second row of the group A, T2 is a time taken when the imaging position by the light-emitting element on the second row of the group A moves to the imaging position of the light-emitting element on the second row of the group B, and T3 is a time taken when the imaging position by the light-emitting element on the second row of the group A moves to the imaging position of the light-emitting element on the second row of the group C.

T1 can be calculated as follows. T2 and T3 can also be calculated similarly by replacing d1 with d2 and d3.

$$T1 = \left| (d1 \times \beta) / S \right|$$

Here, each parameter is as follows.

d1: distance between light-emitting elements in the sub-scanning direction
S: movement speed of an imaging surface (image carrier)
β: magnification of a lens

In Fig. 9, the light-emitting elements on the second row of the group B are made to emit light after the time T2 for which the light-emitting elements on the second row of the group A emit light. Then, the light-emitting elements on the second row of the group C are made to emit light after the time T3 has elapsed from the time T2. The light-emitting elements on the first row of each group emit light after the time T1 since the light-emitting elements on the second row emitted light. By performing such processing, imaging spots, which are formed by light emitters that are disposed in a two-dimensional manner in the light emitter array 1, can be formed in a row on the image carrier as shown in Fig. 8. Fig. 10 is an explanatory view illustrating an example where imaging spots are formed to be inverted in the main scanning direction of the image carrier in the case where the plurality of microlenses 5 are arrayed.

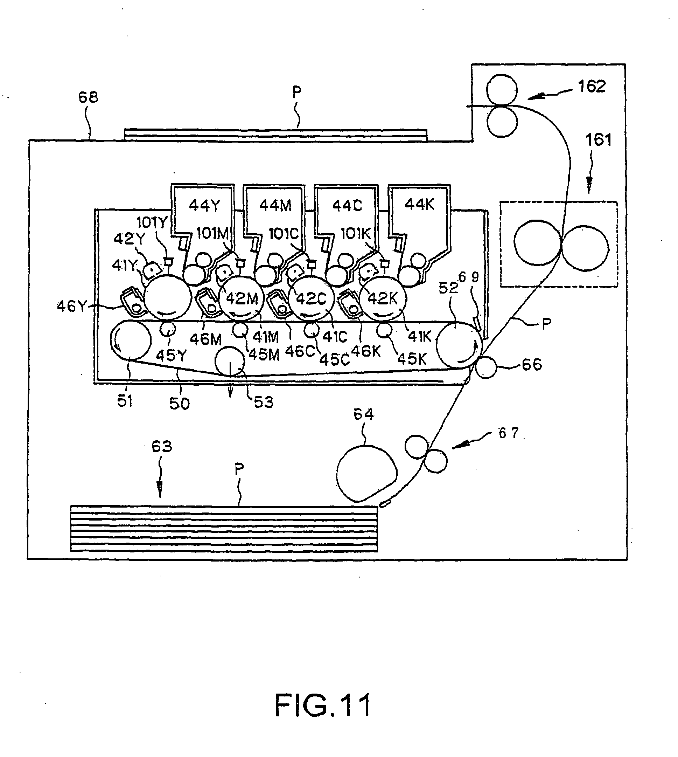

An image forming apparatus can be formed by using the above-described line head. In an embodiment, the above-described line head can be used for a tandem-type color printer (image forming apparatus) that exposes four photoconductors to light with four line heads, forms images corresponding to four color at the same time, and transfers the images onto one intermediate transfer belt (intermediate transfer medium) having an endless shape. Fig. 11 is a longitudinal section side view illustrating an example of a tandem-type image forming apparatus that uses an organic EL element as a light-emitting element. In the image forming apparatus, four line heads 101K, 101C, 101M, and 101Y having the same configuration are arrayed at exposure positions of four corresponding photoconductor drums (image carriers) 41K, 41C, 41M, and 41Y having the same configuration. The image forming apparatus is configured as a tandem type image forming apparatus.

As shown in Fig. 11, the image forming apparatus includes a driving roller 51, a driven roller 52, a tension roller 53, and an intermediate transfer belt (intermediate transfer medium) 50 which is suspended by tension applied by the tension roller 53 and is driven to rotate in the direction (counterclockwise direction) indicated by the arrows shown in the drawing. The photoconductor drums 41K, 41C, 41M, and 41Y, which serve as four image carriers and each of which has a photosensitive layer on the outer peripheral surface thereof, are arrayed at predetermined gaps with respect to the intermediate transfer belt 50.

The letters K, C, M, and Y appended to the ends of the reference numerals stand for black, cyan, magenta, and yellow, respectively, which indicate photoconductor drums for black, cyan, magenta, and yellow. The same is true for other members. The photoconductor drums 41K, 41C, 41M, and 41Y are driven to rotate in the direction (clockwise rotation) indicated by the arrow shown in the drawing in synchronization with the driving of the intermediate transfer belt 50. A charging unit (corona charger) 42(K, C, M, Y) for uniformly charging the outer peripheral surface of each photoconductor drum 41(K, C, M, Y) and the above-described line head 101(K, C, M, Y) according to the embodiment of the invention for sequentially scanning the outer peripheral surface, which is charged uniformly by the charging unit 42(K, C, M, Y), in synchronization with rotation of the photoconductor drum 41 (K, C, M, Y) are provided on the periphery of each photoconductor drum 41(K, C, M, Y).

In addition, there is further provided a developing unit 44 (K, C, M, Y) for applying toner, serving as a developing agent, onto an electrostatic latent image formed by the line head 101 (K, C, M, Y) in order to convert the image into a visible image (toner image), a primary transfer roller 45 (K, C, M, Y) serving as a transfer unit that sequentially transfer the toner image developed by the developer 44(K, C, M, Y) onto the intermediate transfer belt 50 which is an object to be primarily transferred, and a cleaner 46 (K, C, M, Y) serving as a cleaning unit that removes toner remaining on the surface of the photoconductor drum 41(K, C, M, Y).

Here, each line head 101 (K, C, M, Y) is provided such that the arrayed direction of the line head 101(K, C, M, Y) is aligned with a generating line of each photoconductor drum 41(K, C, M, Y). In addition, the peak wavelength of light emission energy of each line head 101 (K, C, M, Y) and the peak wavelength of sensitivity of each photoconductor drum 41(K, C, M, Y) are set to be approximately equal to each other.

The developing unit 44 (K, C, M, Y) uses single-nonmagnetic-component toner as the developing agent, for example. The single-component developing agent is transported to a developing roller by a feeding roller, for example, the film thickness of the developing agent attached to the surface of the developing roller is regulated by a regulating blade, and the developing roller is brought into contact with or pressed against the photoconductor drum 41(K, C, M, Y) to cause the developing agent to be adhered thereto depending on the electrical potential level of the photoconductor drum 41(K, C, M, Y). A toner image is thus developed.

The four toner images of black, cyan, magenta, and yellow generated by the four single-color toner image forming stations are primary-transferred sequentially onto the intermediate transfer belt 50 by a primary transfer bias applied to each of the primary transfer rollers 45(K, C, M, Y). Then, a full-color toner image generated by sequentially superimposing these single-color toner images on the intermediate transfer belt 50 is secondary-transferred onto a recording medium P, such as paper, by a secondary transfer roller 66. The secondary-transferred image is then fixed on the recording medium P after passing through a fixing roller pair 161 that is a fixing unit, and the recording medium P is ejected onto a paper discharging tray 68 provided at the top of the apparatus by a paper discharging roller pair 162.

Moreover, in Fig. 11, reference numeral 63 denotes a paper feeding cassette having a number of recording media P laminated and held thereon, and reference numeral 64 denotes a pick-up roller for feeding the recording media P from the paper feeding cassette 63 one by one. Reference numeral 65 denotes a gate roller pair for regulating the timing of feeding of the recording medium P to the secondary transfer portion of the secondary transfer roller 66, reference numeral 66 is a secondary transfer roller 66 serving as a secondary transfer unit that forms a secondary transfer portion together with the intermediate transfer belt 50, and reference numeral 67 denotes a cleaning blade serving as a cleaning unit that removes toner remaining on the surface of the intermediate transfer belt 50 after the secondary transfer.

The invention relates to an optical system of the above-described line head (optical writing line head). First, the principle will be described.

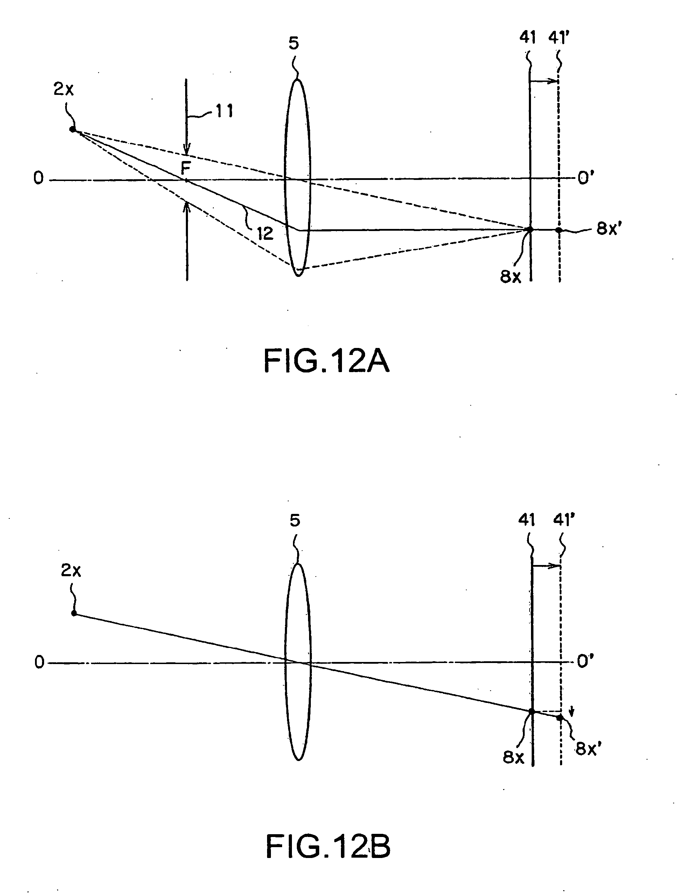

Figs. 12A and 12B are views for explaining the basic principle of some embodiments according to the invention. Figs. 12A and 12B are views illustrating the relationship among an end light-emitting element 2x of a light-emitting element row which is disposed in the line shape in a line head, the microlens 5 which projects the light-emitting element row, and the photoconductor (image carrier) 41 onto which the light-emitting element row is projected. Fig. 12A shows a case in the invention, and Fig. 12B shows a case of a known example. In the known example shown in Fig. 12B, since it is general that an opening of the microlens 5 is defined by the appearance, an imaging spot 8x which is an image on the photoconductor 41 of the end light-emitting element 2x is formed on a straight line passing through the end light-emitting element 2x and the microlens 5. Accordingly, when a surface of the photoconductor 41 which is an image surface moves forward or backward in the direction of a lens optical axis O-O' due to vibration of the photoconductor, for example, to thereby move to a position 41' of the drawing, the position of the imaging spot 8x on the photoconductor 41 moves to the position 8x' on the straight line. As a result, the positional deviation of the imaging spot occurs, and unevenness in the pitch between scanning lines drawn by relative movement of the imaging spot 8x in the sub-scanning direction occurs (pitch unevenness of imaging spots in the main scanning direction).

For this reason, in an embodiment of the invention, an aperture diaphragm 11 is disposed at the position of a front side focal point F of the microlens 5 so as to be positioned on the same axis as the optical axis O-O', as shown in Fig. 12A. In the case when the aperture diaphragm 11 is disposed at the front side focal point F of the microlens 5, a main light beam 12 from the end light-emitting element 2x passes through the center of the aperture diaphragm 11, is refracted by the microlens 5, and then moves in parallel with the optical axis O-O'. Accordingly, even if the photoconductor 41 moves to the position 41' in the direction of the optical axis O-O', the position of the imaging spot 8x on the photoconductor 41 becomes the position 8x' of the main light beam 12 after refraction at the microlens 5. As a result, even if the position of the photoconductor 41 changes forward or backward, the positional deviation of the imaging spot 8x does not occur. For this reason, the pitch unevenness of the imaging spots 8x in the main scanning direction in the related art does not occur, and unevenness in the pitch between scanning lines drawn by movement of the imaging spots 8x in the sub-scanning direction does not occur.

That is, in an embodiment of the invention, in the line head where a plurality of light-emitting elements are arrayed in rows in the main scanning direction, one positive lens system is disposed corresponding to the plurality of light-emitting elements, and an image is formed by projecting images (array of imaging spots) on rows of light-emitting elements onto a projected surface (photoconductor), the projection optical system is made to have a so-called telecentric configuration on an image side. As a result, the positional deviation of imaging spots does not occur even if the position of the projected surface (photoconductor) shifts in the optical axis direction, it is possible to prevent deterioration of an image formed.

In addition, regarding a function of the aperture diaphragm 11, it is preferable that the aperture diaphragm 11 have a shape of restricting at least the aperture diameter in a direction (main scanning direction) in which the positional deviation of an off-axis imaging spot is a problem. In the case of disposing an array corresponding to one row of light-emitting elements with respect to one positive lens system like the known example (JP-A-2-4546 and JP-A-6-278314), it is enough that the aperture diaphragm 11 has a shape of restricting the aperture diameter in the main scanning direction. In addition, even in the case where two rows of arrays are disposed so as to be very close to each other in the sub-scanning direction like the above-described embodiment of the invention (Fig. 4), the aperture diaphragm 11 may have not only the shape of restricting the aperture diameter in the main scanning direction but also a shape of restricting the aperture diameter in the sub-scanning direction. That is, any opening shape of circular, elliptical, and rectangular shapes may be used.

In the explanation made with reference to Fig. 12, the microlens 5 is assumed to include one positive lens. However, it is more preferable that the microlens 5 be formed by using a lens system with positive refractive power where two positive lenses are disposed on the same axis from the point of view of the degree of freedom of aberration correction and the like.

Assuming that the two positive lenses that form the microlens 5 are thin lenses in the case described above, an angle of view of a light beam emitted from the end light-emitting element 2x of a lens system that is telecentric on the image side will be considered.

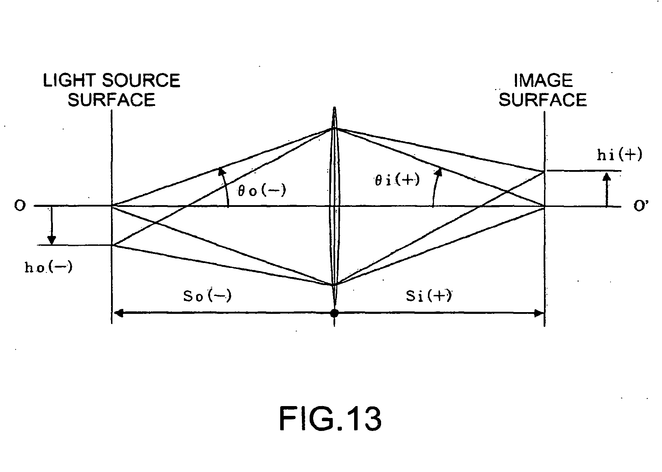

First, reference numerals of parameters are defined as shown in Fig. 13. That is, a clockwise direction is positive for an angle $\theta$ measured from the optical axis O-O', an upper side is positive for an image height h measured from the optical axis O-O', and a right side is positive for a distance in the direction of the optical axis O-O' measured from the thin lens. In addition, a lowercase letter 'o' after reference numeral means an object-side parameter, and a lowercase letter 'i' after reference numeral means an image-surface-side parameter.

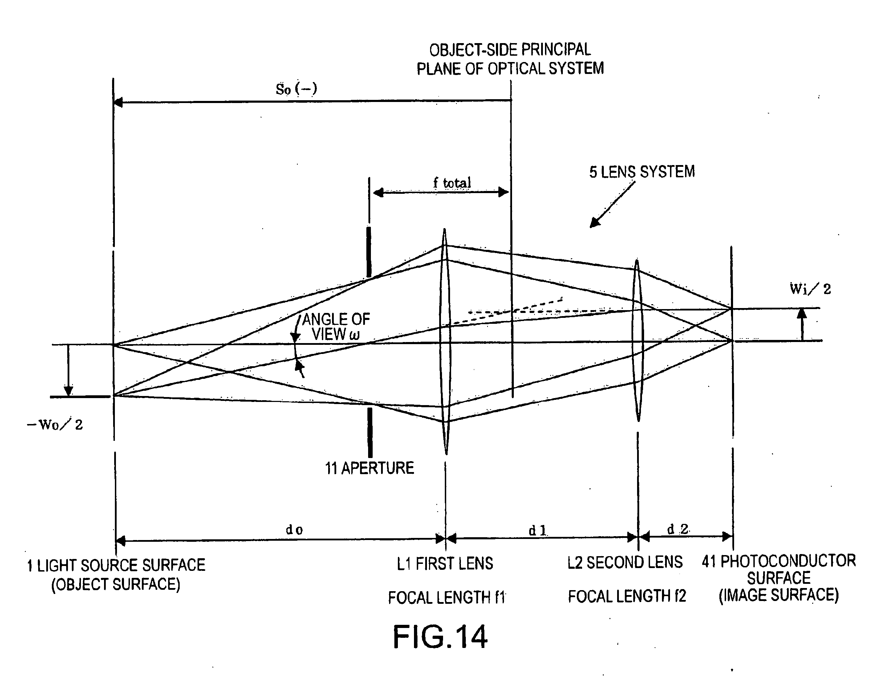

Since the lens system (microlens) 5 configured to include a first positive lens L1 and a second positive lens L2 is telecentric on the image side, the diaphragm 11 is disposed such that an entrance pupil is located at a front side focal position of the lens system 5. Accordingly, assuming that a total focal length of the lens system is $f_{total}$, a position of a light source (light emitter array 1) with respect to an object-side principal plane of the lens system is $S_o$, and a light-emitting element group width (total width) between the end light-emitting elements 2x in the light emitter block 4 is $W_o$, an angle of view $\omega$ of the end light-emitting elements 2x is expressed by the following expression (1) referring to Fig. 14.

$$\omega = (W_o / 2) / (-S_o - f_{total}) \ ... \ (1)$$

Here, assuming that an imaging spot group width (total width) between the imaging spots 8x which are images of the end light-emitting elements 2x on the surface (image surface) of the photoconductor 41 is $W_i$, a lateral magnification

is $\beta$, and a position of an image surface with respect to an object-side principal plane of the lens system is $S_i$, $W_o$ and $S_o$ are expressed by the following expression (2).

$$W_o = -W_i \; / \; \beta = -W_i \cdot S_o \; / \; S_i \; \ldots \; (2)$$

From the paraxial imaging expression, the following expression (3) is obtained.

$$1 \; / \; S_i = 1 \; / \; S_o + 1 \; / \; f_{total} \; \ldots \; (3)$$

Then, the following expression (4) is obtained by solving the expression (3) for $S_o$.

$$S_o = S_i \cdot f_{total} \; / \; (f_{total} - S_i) \; \ldots \; (4)$$

By substituting the expressions (2) and (4) into the expression (1) for rearrangement, the following expression (5) is obtained.

$$\omega = W_i \; / \; (2 f_{total}) \; \ldots \; (5)$$

Here, assuming that a focal length of the first positive lens L1 is $f_1$, a focal length of the second positive lens L2 is $f_2$, and a distance between the first positive lens L1 and the second positive lens L2 is $d_1$, the total focal length $f_{total}$ is expressed by the following expression (6).

$$f_{total} = f_1 \cdot f_2 \; / \; (f_1 + f_2 - d_1) \; \ldots \; (6)$$

The following expression (7) is obtained by substituting the expression (6) into the expression (5).

$$\omega = W_i \; (f_1 + f_2 - d_1) \; / \; (2 f_1 \cdot f_2) \; \ldots \; (7)$$

Noting $d_1$ of the expression (7), m is decreased as $d_1$ is increased in a condition of $(f_1 + f_2) \geq d_1$. In the case where the arrangement of the diaphragm 11 is limited to the object side rather than the first positive lens L1 due to structural restriction, for example, the lens distance $d_1$ is limited as expressed by the following expression (8) in order to make an image side telecentric.

$$0 \leq d_1 \leq f_2 \; \ldots \; (8)$$

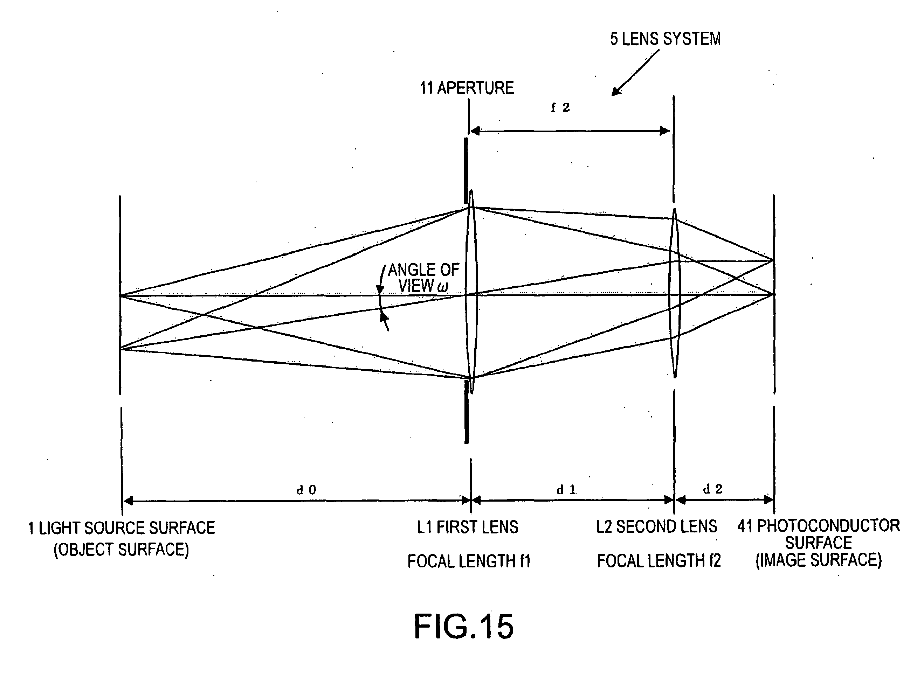

In the range of the expression (8), setting $d_1$ as large as possible in order to make the angle of view $\omega$, which is expressed in the expression (7), as small as possible leads to setting $d_1$ to a value as close as possible to $f_2$. At this time, a distance between the diaphragm 11 and the first positive lens L1 approaches zero. When $d_1 = f_2$ is substituted into the expression (6) for rearrangement, $f_{total} = f_2$ (Fig. 15).

As described above, in examination as a thin lens of the two-sheet positive lens optical system 5 in which the diaphragm 11 is disposed on the side of the light emitter array 1 from the first positive lens L1, in order to make an object side telecentric and to reduce a shading phenomenon as much as possible in which a decrease in the peripheral light amount becomes large according to a fourth power of cosine rule, it is preferable that the diaphragm 11 be disposed on a front side focal plane of the lens system 5 configured to include two positive lenses L1 and L2 and the first positive lens L1 be disposed close to the diaphragm 11 so as to make the angle of view of the optical system small. At this time, the diaphragm 11 and the first positive lens L1 become close to a front side focal plane of the second positive lens L2, as shown in Fig. 15.

Having described about examination as the thin lens, a thick lens system that actually configures it will now be described.

In the lens system 5 in which the diaphragm 11 is disposed at a front side (object side) from the first positive lens L1, even if thick lenses are used as the two positive lenses L1 and L2, it is preferable that the diaphragm 11 be disposed at the front side focal position of the composite optical system configured to include the two positive lenses L1 and L2 in order to make the lens system 5 telecentric on the image side. Furthermore, from a result of the examination as the thin lens, it is possible to reduce the angle of view by disposing the first positive lens L1 and the diaphragm 11 so as to be close to each other. This can reduce an effect of shading. In a first example of specific number to be described later, a distance between a surface of the diaphragm 11 and an object-side surface of the first positive lens L1 is zero.

Furthermore, in the thick lens, a principal plane position changes with power distribution of an incidence surface (object-side surface) and an emission surface (image-surface-side surface). However, since a rear side principal plane of the first positive lens L1 is positioned to be close to the incidence surface side, compared with a biconvex positive lens, by making the first positive lens L1 a plano-convex lens which is convex on the incidence surface, a distance between the rear side principal plane of the first positive lens L1 and the front side principal plane of the second positive lens L2 can be further increased. Moreover, in this case, a lens formed surface (curved surface) of the first positive lens L1 is one, which is also advantageous in that manufacturing becomes easy. In a second example of specific number to be described later, as compared with the first example, the first positive lens L1 is made as a plano-convex positive lens while maintaining the focal length thereof. Accordingly, a maximum angle of view is smaller than that in the first example.

Moreover, in the case where an the incidence surface of the first positive lens L1 is a convex surface, the distance between the rear side principal plane of the first positive lens L1 and the front side principal plane of the second positive lens L2 can be further increased by disposing the first positive lens L1 such that the incidence surface of the first positive lens L1 is hidden in the opening of the diaphragm 11, that is, by disposing the first positive lens L1 such that the apex of the incidence surface of the first positive lens L1 is closer to an object side than the surface of the diaphragm 11 (third example). In addition, in this case, the arrangement position of the diaphragm 11 is a front side focal position of the composite optical system configured to include the positive lenses L1 and L2, but the front side focal point is included in the first positive lens L1. Accordingly, in the case where parallel beams are incident from the image side, the beams are condensed into the first positive lens L1 and then become diverging beams that diverge from the condensing point. As a result, an angle of divergence is reduced on the incidence surface of the first positive lens L1 and the beams move toward the object side. Although an image seen from the object side of the condensing point (diverging light) is a virtual image, a surface on which the virtual image exists is a front side focal plane of the entire lens system. Thus, a configuration which is telecentric on the image side is obtained by disposing the diaphragm 11 on the front side focal plane.

In addition, even if the diaphragm 11 is disposed very close to the incidence surface of the first positive lens L1 without the diaphragm 11 disposed at the incidence surface position of the first positive lens L1 and disposed such that the incidence surface of the first positive lens L1 is hidden in the opening of the diaphragm 11, the angle of view of the optical system can be made small as long as the diaphragm 11 is disposed on the front side focal plane of the lens system 5 configured to include the two positive lenses L1 and L2. As a result, the shading phenomenon based on the fourth power of cosine rule can be reduced (fourth example).

As described above, the configuration which is telecentric on the image side is realized by configuring a lens system with positive refractive power in which two positive lenses are disposed as the microlenses 5 on the same axis, positioning the front side focal point of the composite optical system near the incidence surface of the first positive lens L1, and disposing the aperture diaphragm 11 at the front side focal position. Accordingly, even if the position of the projected surface (photoconductor) 41 shifts in the optical axis direction, the positional deviation of an imaging spot does not occur and the shading phenomenon in which a decrease in the peripheral light amount becomes large according to the fourth power of cosine rule. As a result, the concentration unevenness of the imaging spots 8 on the light-emitting element row disposed in the line shape in the light emitter array 1 does not easily occur.

Accordingly, by using the optical system of the line head according to the embodiment of the invention for the optical writing line head, the pitch unevenness of the imaging spots 8 in the main scanning direction in the related art does not occur and unevenness in the pitch between scanning lines drawn by movement of the imaging spots 8 in the sub-scanning direction does not occur.

In addition, the concentration unevenness between the imaging spots 8 caused by the shading of the microlens 5 in the related art does not easily occur, and the concentration unevenness between scanning lines drawn by the movement of the imaging spots 8 in the sub-scanning direction does not easily occur.

Furthermore, in the above description, the front side focal position of the composite optical system configured to include the positive lenses L1 and L2 is positioned close to the incidence surface of the first positive lens L1. In the embodiment of the invention, however, a case where the incidence surface of the first positive lens L1 is positioned within $\pm 10\%$ of the total focal length $f_{total}$ of the composite optical system is assumed that the front side focal position of the composite optical system is positioned close to the incidence surface or in the neighborhood of the incidence surface.

However, in the case of a configuration where only a row of microlenses 5 which are telecentric on the image side as described above are arrayed in the main scanning direction in an optical system of a line head, the light amount of the imaging spot 8x that is an image of the end light-emitting element 2x is necessarily reduced due to an effect of eclipse compared with the light amount of other imaging spots on the imaging spot row, in order to make a distance between the imaging spot 8x, which is an image of the end light-emitting element 2x on the light-emitting element row disposed in the line shape by the specific microlens 5, and the adjacent imaging spot 8x imaged by the adjacent microlens 5 equal to the pitch of imaging spot rows imaged by one microlens 5. In order to avoid the above situation, a problem that the light amount of the imaging spot 8x which is an image of the end light-emitting element 2x is reduced can be solved by disposing the light emitter blocks 4 in the main scanning direction with a gap therebetween, disposing the light emitter blocks 4 in the sub-scanning direction, and disposing the microlens arrays 6 in the main scanning direction and the sub-scanning direction in a two-dimensional manner, in which the microlenses 5 are arrayed, corresponding to the array of the light emitter blocks 4 as shown in Figs. 1 to 10.

As described above, in the embodiment of the invention, in the line head where a plurality of light-emitting elements are arrayed in rows in the main scanning direction, one positive lens system is disposed corresponding to the plurality of light-emitting elements, and an image is formed by projecting images (array of imaging spots) on rows of light-emitting elements onto a projected surface (photoconductor), the projection optical system is configured to include two positive lens and is made to be telecentric on the image side and the incident surface of an object-side positive lens is disposed as close as possible to the aperture diaphragm. As a result, the positional deviation of imaging spots does not occur even if the position of the projected surface (photoconductor) shifts in the optical axis direction, and deterioration of the formed image is prevented by reducing the concentration unevenness of imaging spots.

In addition, regarding a function of the aperture diaphragm 11, it is preferable that the aperture diaphragm 11 have a shape of restricting at least the aperture diameter in a direction (main scanning direction) in which the positional deviation of an off-axis imaging spot is a problem. In the case of disposing an array corresponding to one row of light-emitting elements with respect to one positive lens system like the known example (JP-A-2-4546 and JP-A-6-278314), it is enough that the aperture diaphragm 11 has a shape of restricting the aperture diameter in the main scanning direction. In addition, even in the case where two rows of arrays are disposed so as to be very close to each other in the sub-scanning direction like the above-described embodiment of the invention (Fig. 4), the aperture diaphragm 11 may have not only the shape of restricting the aperture diameter in the main scanning direction but also a shape of restricting the aperture diameter in the sub-scanning direction. That is, any opening shape of circular, elliptical, and rectangular shapes may be used.

In addition, in the explanation made with reference to Fig. 15, each of the positive lenses L1 and L2 which form the microlens 5 is configured to include one lens. However, a lens systems with positive refractive power in which two or more lenses are disposed on the same axis may also be used.

Furthermore, in the above explanation, the microlens 5 is an axially-symmetric lens system in which focal lengths and focal positions in the main scanning direction and the sub-scanning direction are equal to each other. However, a lens system that forms the microlens 5 may be an anamorphic lens system in which focal lengths and magnifications in the main scanning direction and the sub-scanning direction are different. In this case, preferably, the aperture diaphragm 11 is disposed to be telecentric on the image side in the main scanning direction (on a cross section in the main scanning direction) and a surface of the composite optical system closest to the object side is positioned close to the position (front side focal position of the composite optical system in the main scanning direction) of the aperture diaphragm 11.

Until now, the optical system of the optical writing line head has been described. However, also in the case of an optical reading line head where in a condition that an optical path is oppositely set, a plurality of light-receiving elements are arrayed in rows in the main scanning direction, one positive lens system is disposed corresponding to the plurality of light-receiving elements, and an image is read by back projecting images (array of read spots) on rows of light-receiving elements onto a read surface, the projection optical system is configured to include two positive lens and is made to be telecentric on the object side and the incident surface of an image-side positive lens is disposed as close as possible to the aperture diaphragm. As a result, the positional deviation of read spots does not occur even if the position of the read surface shifts in the optical axis direction, and deterioration of the read image is prevented by reducing the concentration unevenness in reading. In this case, reference numeral 41 indicates a read surface and reference numeral 2x indicates an end light-receiving element in Figs. 12A and 15, and the principle is the same as that in the optical system of the optical writing line head.

Next, the optical writing line head in the first example to which the principle of the invention is applied will be described.

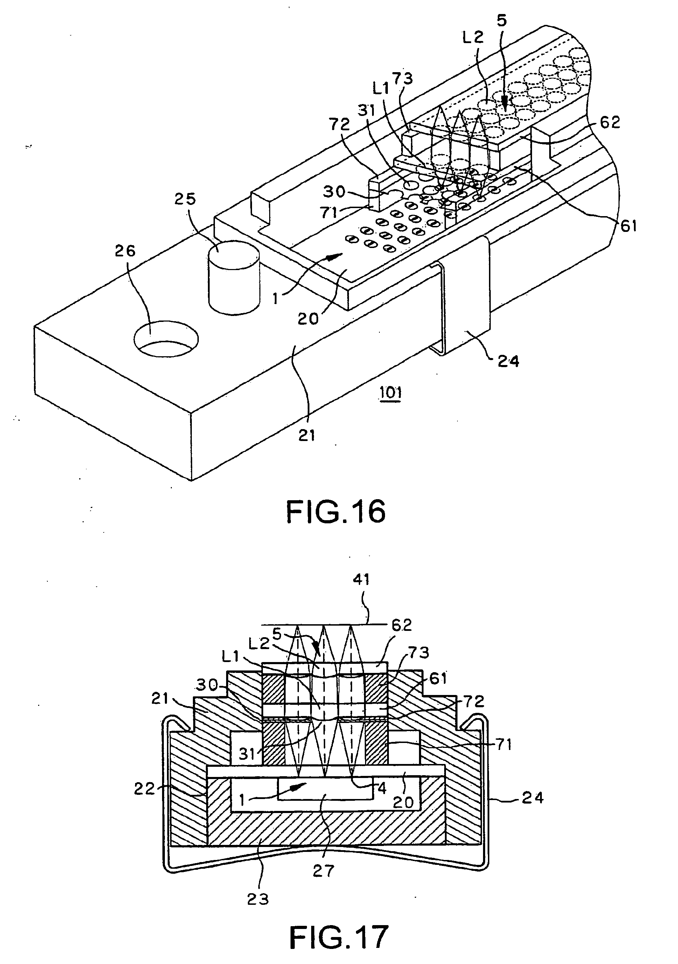

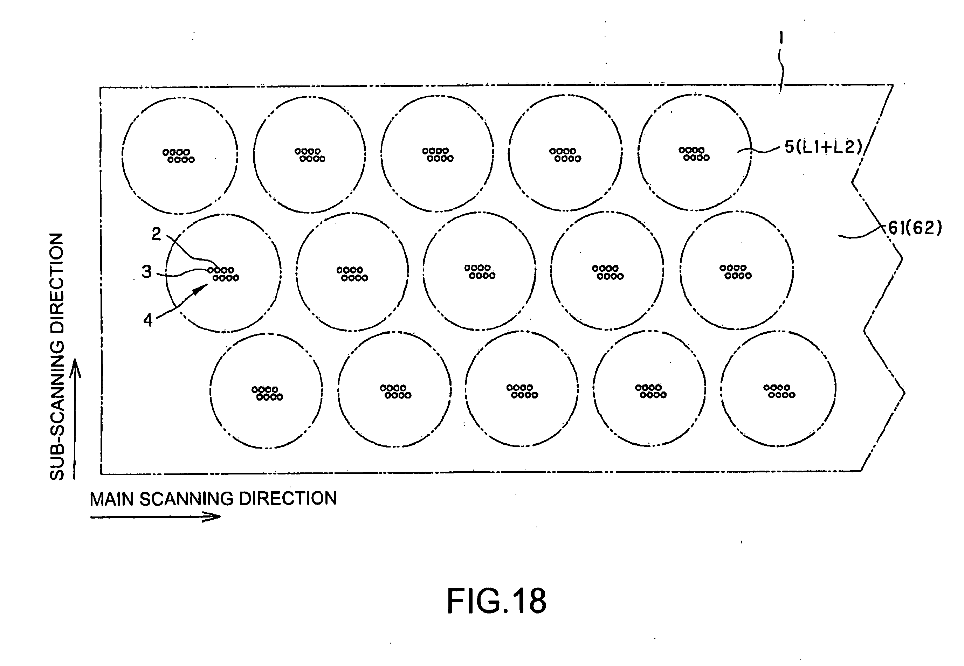

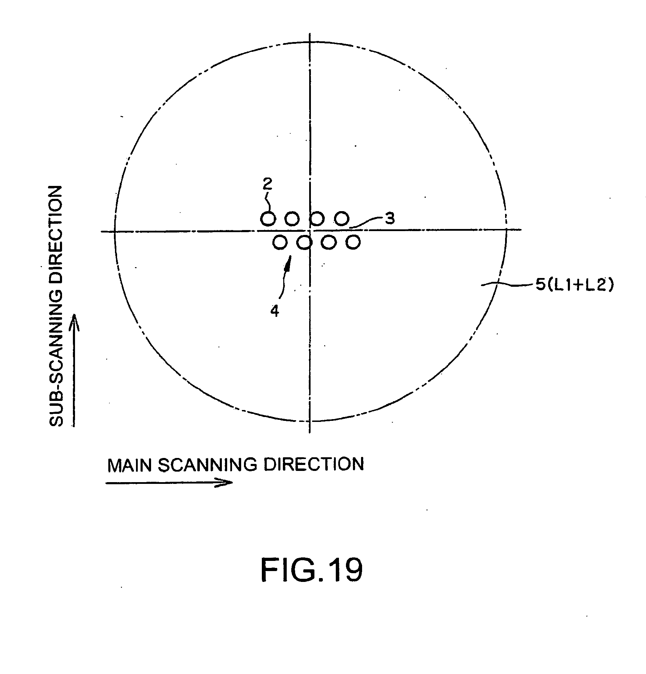

Fig. 16 is a perspective view illustrating a broken part of the configuration of the optical writing line head in the example, and Fig. 17 is a cross-sectional view taken along the sub-scanning direction of Fig. 16. In addition, Fig. 18 is a plan view illustrating the arrangement of a light emitter array and a microlens array in the case shown in Fig. 16. In addition, Fig. 19 is a view illustrating the correspondence relationship between one microlens and a light emitter block corresponding thereto.

In this example, similar to the case shown in Figs. 4 and 7, two light-emitting element rows 3 in which four light-emitting elements 2 (organic EL elements in this example) are arrayed in the main scanning direction are formed in the sub-scanning direction to thereby form one light emitter block 4, the plurality of light emitter blocks 4 are provided in the main scanning direction and the sub-scanning direction to thereby form the light emitter array 1, and the light emitter blocks 4 are arrayed in a zigzag manner in the sub-scanning direction by shifting the head positions thereof in the main scanning direction. In the example shown in Fig. 16, the light emitter blocks 4 are disposed in three rows in the sub-scanning direction. Such a light emitter array 1 is formed on a rear surface of a glass substrate 20 and is driven by a driving circuit formed on the rear surface of the same glass substrate 20. In addition, the organic EL elements (light-emitting elements 2) of the rear surface of the glass substrate 20 are sealed with a sealing member 27.

The glass substrate 20 is inserted into a socket 22 provided in a long case 21 and is fixed by a fixing bracket 24 after a back lid 23 is put on the glass substrate 20. Positioning pins 25 provided at both ends of the long case 21 are inserted into opposite positioning holes of a main body of an image forming apparatus and are fixed by screwing fixing screws to screw holes of the main body of the image forming apparatus through screw insertion holes 26 provided at both ends of the long case 21, such that an optical writing line head 101 is fixed at the predetermined position.

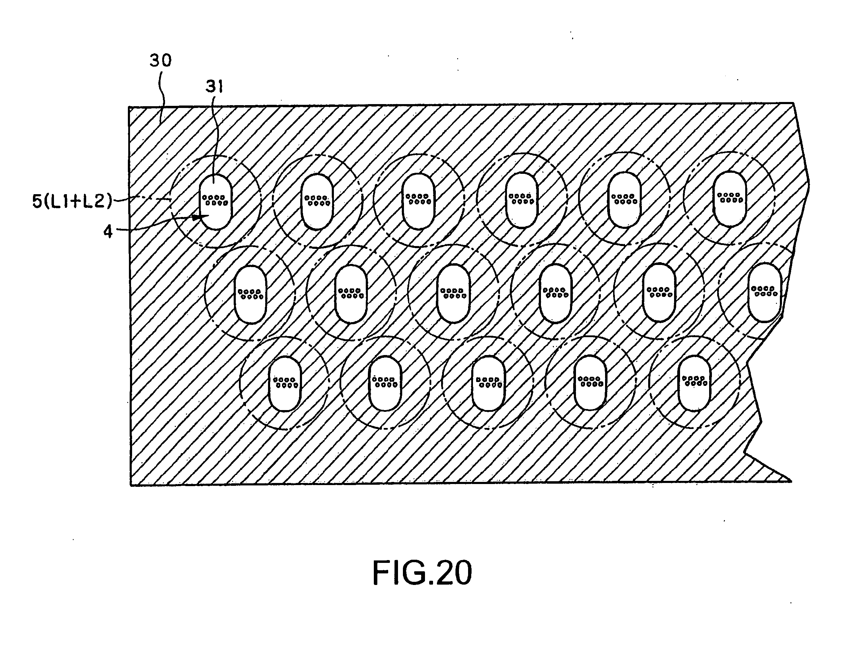

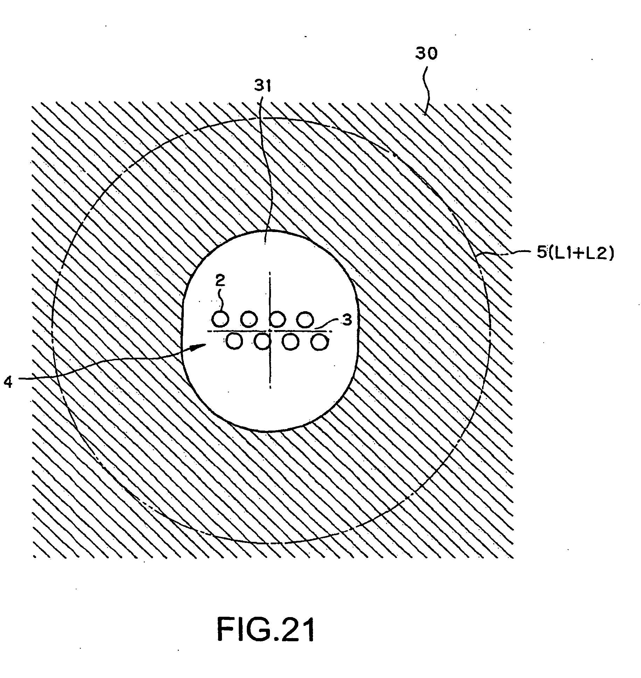

In addition, on a surface side of the glass substrate 20 of the case 21, an aperture plate 30 in which openings 31 (Figs. 20 and 21) are provided so as to be aligned with the middle of each light emitter block 4 of the light emitter array 1 is disposed with a first spacer 71 interposed therebetween. On the aperture plate 30, a first microlens array 61 which uses the positive lens L1 as a constituent component such that the middle of each light emitter block 4 of the light emitter array 1 is aligned with the positive lens L1 is disposed with a second spacer 72 interposed therebetween. On the first microlens array 61, a second microlens array 62 which uses the positive lens L2 as a constituent component such that the middle of each light emitter block 4 of the light emitter array 1 is aligned with the positive lens L2 is disposed with a third spacer 73 interposed therebetween.

Thus, a lens array of the microlens 5 which projects a light-emitting element row of each light emitter block 4 is formed by combination of the first microlens array 61 and the second microlens array 62.

Furthermore, in the embodiment of the invention, the aperture plate 30 is disposed so as to match the object-side (front side) focal position of the composite lens system configured to include the positive lens L1, which forms the first microlens array 61, and the positive lens L2, which forms the second microlens array 62, and the thicknesses of the first spacer 71, second spacer 72, and third spacer 73 are set such that the object-side focal point of the microlens 5 (positive lens L1 + positive lens L2) matches or is close to an object-side surface of the positive lens L1. Details of the aperture plate 30 are shown in Figs. 20 and 21. Fig. 20 is a plan view illustrating the aperture plate 30 disposed corresponding to the light emitter block 4 of the light emitter array 1, and Fig. 21 is a view illustrating the opening 31 of the aperture plate 30 with respect to one light emitter block 4. In the aperture plate 30, the openings 31 are provided so as to be aligned with the middle (optical axis) of each microlens 5, which is configured to include the positive lens L1 and the positive lens L2, and the middle of the light emitter block 4. In this example, the shape of each opening 31 is an approximately elliptical shape of restricting the aperture diameter in the main scanning direction to be equal to or larger than that in the sub-scanning direction. However, as described above, any opening shape of circular, elliptical, and rectangular shapes may be used.

In the above example, the optical writing line head 101 that uses as the light-emitting elements 2 organic EL elements provided on the rear surface of the glass substrate 20 and uses light emitted toward the surface side of the glass substrate 20, that is, the optical writing line head 101 having a bottom emission arrangement has been described. However, an EL device or an LED in which the light-emitting elements 2 are disposed on the surface of the substrate may also be used.

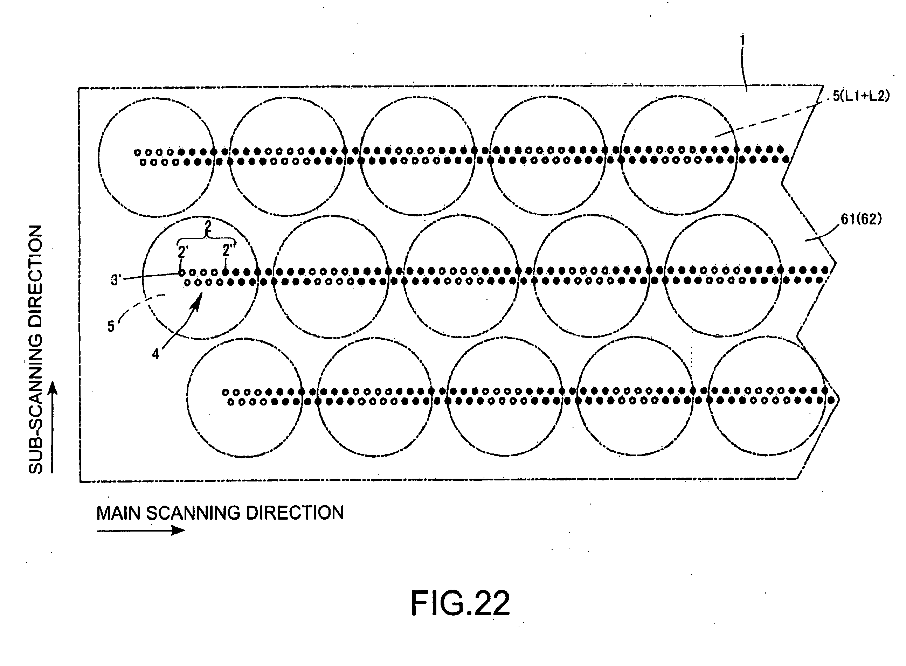

In the above explanation, as shown in Figs. 7 and 18, the light emitter array 1 is configured such that the light emitter block 4 is formed by providing the light-emitting element row 3, in which a plurality of light-emitting elements 2 are arrayed in the main scanning direction, in one or a plurality of rows in the sub-scanning direction and the microlens 5 is disposed corresponding to each light emitter block 4. However, the same light emitter block 4 as in the cases shown in Figs. 7 and 18 can be configured by disposing the light-emitting elements 2 in the shape of a long row in which the light-emitting elements 2 are continuously disposed at small distances therebetween in the main scanning direction, making a control such that only a light-emitting element group corresponding to the light emitter block 4 disposed as described above emits light, and making a control such that light-emitting elements existing between the light-emitting element groups do not emit light. Fig. 22 is a view corresponding to Fig. 18 in that case. That is, each of the light emitter blocks 4 can be configured by disposing, as the light emitter array 1, a light-emitting element row 3' in the shape of a long row in which the light-emitting elements 2 are continuously disposed at small equal distances therebetween in the main scanning direction, making a control such that only a group of light-emitting elements 2' (expressed by ○) related to formation of the imaging spots 8 through the microlens 5 of the light-emitting element row 3' emits light, and making a control such that a group of light-emitting elements 2" (expressed by ●) existing between the groups of light-emitting elements 2' do not emit light. In the case shown in Fig. 22, the microlenses 5 are disposed in three rows in the main scanning direction, the light-emitting element rows 3' are formed in two rows in the sub-scanning direction so as to correspond to each row of the microlenses 5, the light-emitting elements 2 of the two light-emitting element rows 3' are disposed in the zigzag manner, and a control is made such that only four light-emitting elements 2' of each light-emitting element row 3' emit light and eight light-emitting elements 2" existing between two groups each having the four light-emitting elements 2' do not emit light.

Furthermore, in the above explanation, in the case where all light-emitting elements 2 and 2' of all light emitter blocks 4 are turned on by adjustment of timing in order to draw one straight line extending in the main scanning direction, the imaging spots 8 arrayed in a line on the image carrier 41 are arrayed between the light emitter blocks 4 so as to be sufficiently adjacent to each other. However, the number and positions of the light-emitting elements 2 and 2' which form the light emitter block 4 may be set to have redundancy so that the imaging spots 8 overlap on the image carrier 41 between the light-emitting elements 2 and 2' which form the light emitter block 4. In this way, for example, even if concentration unevenness occurs in the imaging spots 8 which are images of the light-emitting elements 2 and 2' near the end of the light emitter block 4, the concentration unevenness can be corrected by making the imaging spots 8 overlap each other.

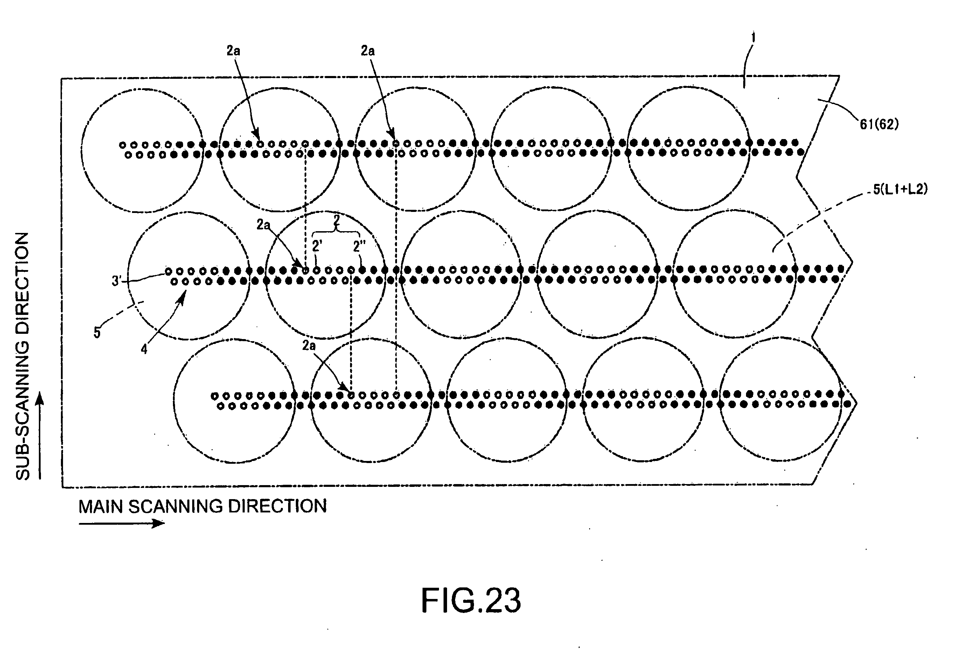

As an example, Fig. 23 illustrates an example where the number of light-emitting elements 2' included in each light emitter block 4 is increased by one (light-emitting element 2a) so as to be '4 x 2' and rows of the imaging spots 8 arrayed in a line on the image carrier 41 by the adjacent microlenses 5 are exposed to overlap each other by one imaging spot 8 at the end in the case where the light emitter array 1 has the configuration shown in Fig. 22. Here, Fig. 23 illustrates a case in which the light-emitting elements 2a at the light emitter array 1 side overlap each other at opposite ends of the adjacent light emitter blocks 4 (light-emitting elements between dotted lines). However, the imaging magnification of the microlens 5 should be -1 for the right drawing.

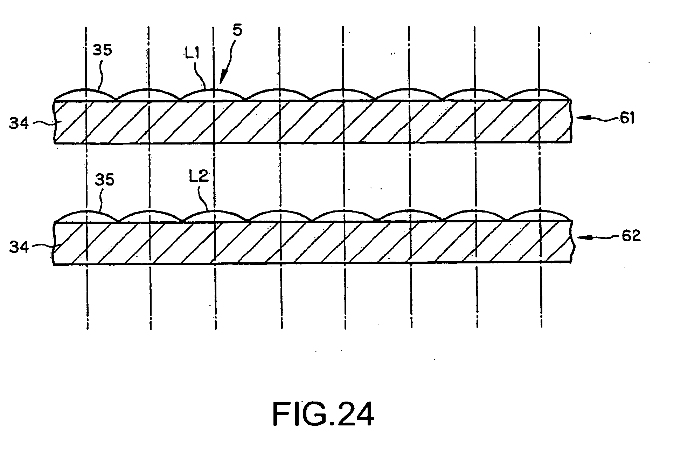

A known microlens array with any kind of configuration may be used as the microlens arrays 61 and 62 used for the optical writing line head 101 according to the embodiment of the invention. Fig. 24 is a cross-sectional view taken along the main scanning direction in the case (Figs. 16 and 17) of configuring the array of the microlenses 5 by combining the first microlens array 61 and the second microlens array 62 such that the microlenses L1 and L2 are aligned on the same axis. In this example, the microlenses L1 and L2 are aligned on one side (object side) of the glass substrate 34 of each of the microlens arrays 61 and 62 and a lens surface portion 35 formed of a transparent resin is integrally formed, thereby configuring each of the microlenses L1 and L2. In this case, by making an image-side surface of the second microlens array 62 flat, even if toner of a developer disperses to adhere to the flat surface of the microlens array when the microlens array is used as a microlens array of a line head of an image forming apparatus, for example, the toner can be simply cleaned. As a result, the cleaning efficiency is improved.

Next, examples of specific numbers of an optical system used in the above examples are shown as first to fourth examples.

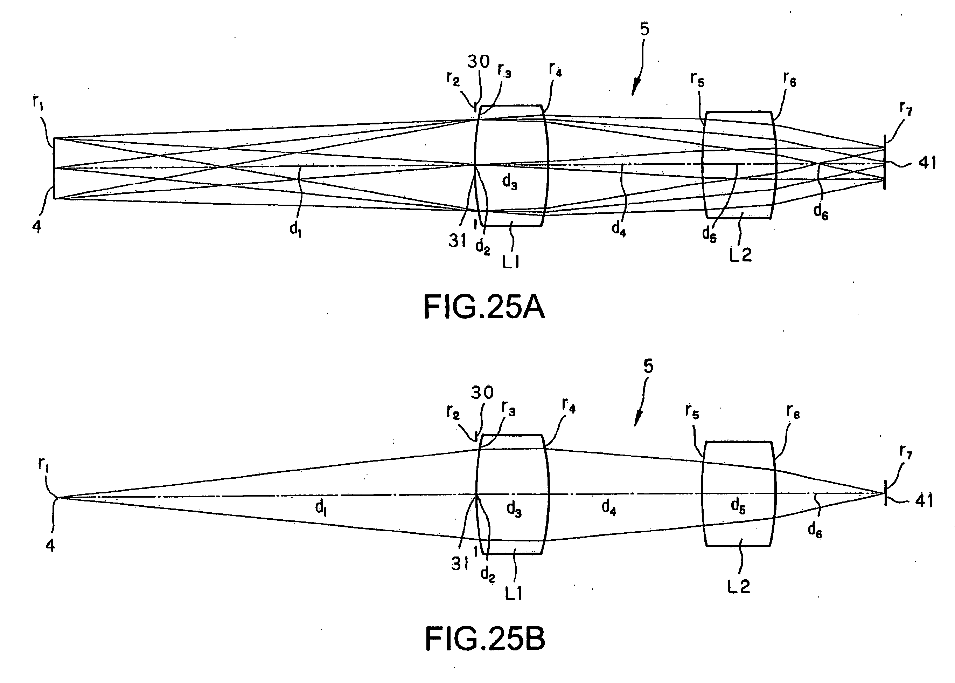

Figs. 25A and 25B are cross-sectional views taken along the main scanning direction and the sub-scanning direction illustrating an optical system corresponding to one microlens 5 of the first example. This is an example of the microlens 5 where a glass substrate is not disposed on the emission side of the light-emitting element 2, the microlens 5 is a composite lens system configured to include the biconvex positive lens L1 and the biconvex positive lens L2, the aperture plate 30 is disposed at the object side (front side) focal point of the composite lens system configured to include the biconvex positive lens L1 and the biconvex positive lens L2 so that the image side is telecentric, and the surface apex of an object-side lens surface (convex surface) of the biconvex positive lens L1 on the object side matches the object-side focal point.

Numeric data of this example is shown below. In the order from a side of the light emitter block 4 to a side of the photoconductor (image surface) 41, $r_1$, $r_2$, ... are radii of curvature (mm) of optical surfaces, $d_1$, $d_2$, ... are distances between optical surfaces (mm), $n_{d1}$, $n_{d2}$, ... are refractive indexes of d lines of transparent media, and $v_{d1}$, $v_{d2}$, ...are Abbe numbers of transparent media. In addition, $r_1$, $r_2$, ... also indicate optical surfaces. The optical surface $r_1$ is the light emitter block (object surface) 4, the optical surface $r_2$ is the opening 31 of the aperture plate 30, the optical surfaces $r_3$ and $r_4$ are object-side surface and image-side surface of the biconvex positive lens L1, the optical surfaces $r_5$ and $r_6$ are object-side surface and image-side surface of the biconvex positive lens L2, and the optical surface $r_7$ is the photoconductor (image surface) 41. In addition, the object-side surface of the biconvex positive lens L1 is an aspheric surface. Assuming that a distance from an optical axis is r, the aspheric shape is expressed by $cr^2/[1+\sqrt{1-(1+K)c^2r^2}]+Ar^4$. Here, c is a curvature (1/r) on the optical axis, K is a conic coefficient, and A is a fourth-order aspheric coefficient. In the following numeric data, $K_3$ and $A_3$ are conic coefficient and fourth-order aspheric coefficient of the object-side surface of the biconvex positive lens L1, respectively.

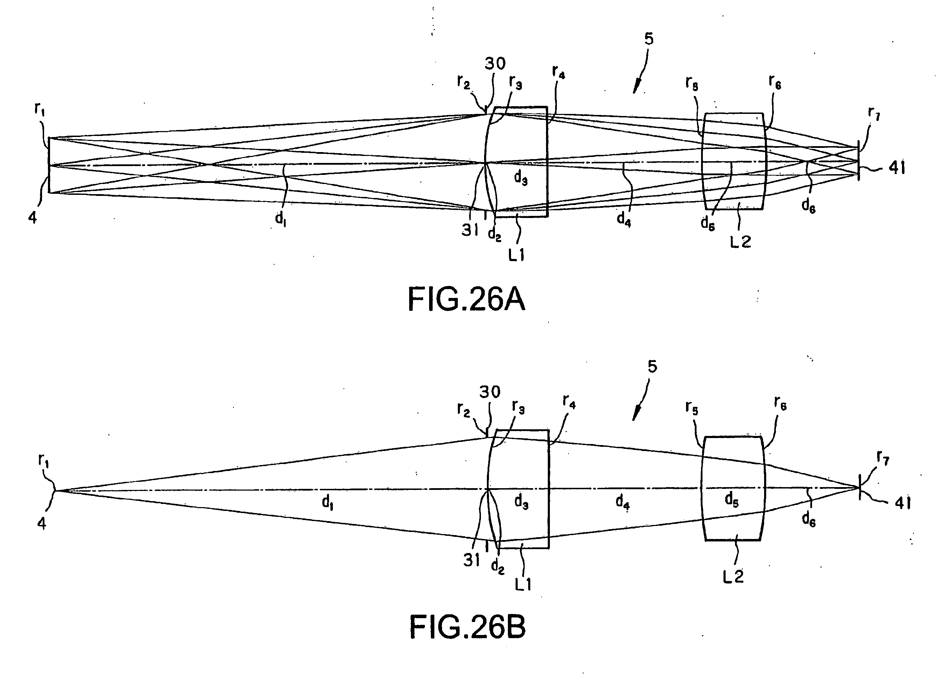

Figs. 26A and 26B are cross-sectional views taken along the main scanning direction and the sub-scanning direction illustrating an optical system corresponding to one microlens 5 of the second example. This is an example of the microlens 5 where a glass substrate is not disposed on the emission side of the light-emitting element 2, the microlens 5 is a composite lens system configured to include the plano-convex lens L1 and the biconvex positive lens L2, the aperture plate 30 is disposed at the object side (front side) focal point of the composite lens system configured to include the plano-convex lens L1 and the biconvex positive lens L2 so that the image side is telecentric, and the surface apex of an object-side lens surface (convex surface) of the plano-convex lens L1 matches the object-side focal point.

In this example, as compared with the first example, the first positive lens L1 is made as a plano-convex positive lens while maintaining the focal length thereof. Accordingly, a maximum angle of view is smaller than that in the first example. In addition, a distance from the light emitter block 4 to the aperture plate 30 is adjusted so that an image formation state of an image surface is satisfied.

Thus, by making the first positive lens L1 a plano-convex lens, the lens formation surface formed as the first microlens array 61 is formed as a single surface, which is advantageous in that manufacturing becomes easy.

Numeric data of this example is shown below. In the order from a side of the light emitter block 4 to a side of the photoconductor (image surface) 41, $r_1$, $r_2$, ... are radii of curvature (mm) of optical surfaces, $d_1$, $d_2$, ... are distances between optical surfaces (mm), $n_{d1}$, $n_{d2}$, ... are refractive indexes of d lines of transparent media, and $v_{d1}$, $v_{d2}$, ... are Abbe numbers of transparent media. In addition, $r_1$, $r_2$, ... also indicate optical surfaces. The optical surface $r_1$ is the light emitter block (object surface) 4, the optical surface $r_2$ is the opening 31 of the aperture plate 30, the optical surfaces $r_3$ and $r_4$ are object-side surface and image-side surface of the plano-convex lens L1, the optical surfaces $r_5$ and $r_6$ are object-side surface and image-side surface of the biconvex positive lens L2, and the optical surface $r_7$ is the photoconductor (image surface) 41. In addition, the object-side surface of the plano-convex lens L1 is an aspheric surface. Assuming that a distance from an optical axis is r, the aspheric shape is expressed by $cr^2/[1+\sqrt{1-(1+K)c^2r^2}]+Ar^4$. Here, c is a curvature (1/r) on the optical axis, K is a conic coefficient, and A is a fourth-order aspheric coefficient. In the following numeric data, $K_3$ and $A_3$ are conic coefficient and fourth-order aspheric coefficient of the object-side surface of the plano-convex lens L1, respectively.

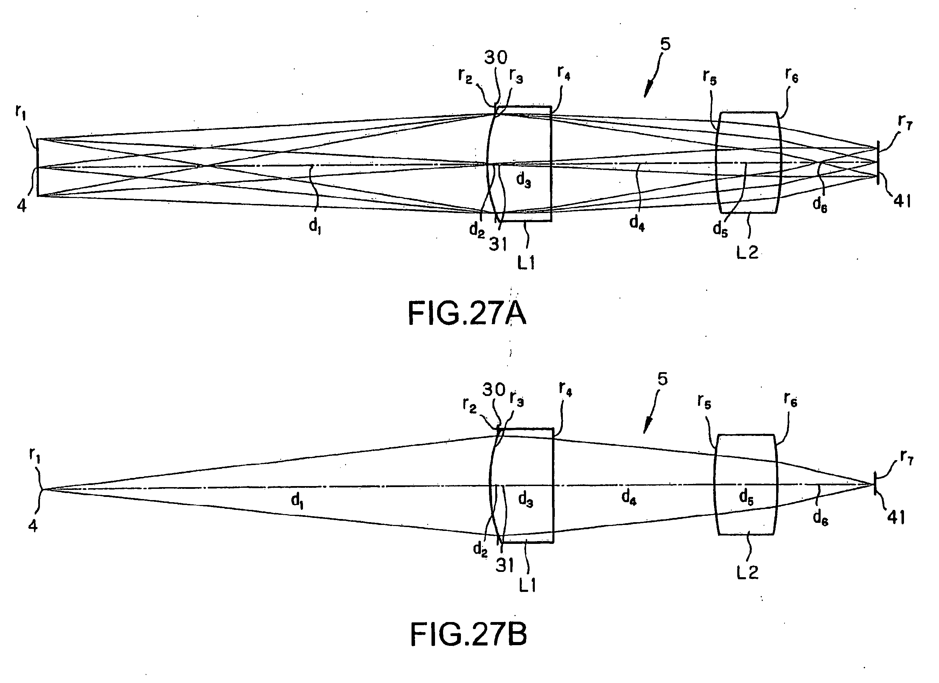

Figs. 27A and 27B are cross-sectional views taken along the main scanning direction and the sub-scanning direction illustrating an optical system corresponding to one microlens 5 of the third example. This is an example of the microlens 5 where a glass substrate is not disposed on the emission side of the light-emitting element 2, the microlens 5 is a composite lens system configured to include the plano-convex lens L1 and the biconvex positive lens L2, the aperture plate 30 is disposed at the object side (front side) focal point of the composite lens system configured to include the plano-convex lens L1 and the biconvex positive lens L2 so that the image side is telecentric, and an object-side convex surface of the plano-convex lens L1 is hidden in the opening 31 of the aperture plate 30.

That is, the distance between a rear side principal plane of the plano-convex lens L1 and a front side principal plane of the biconvex positive lens L2 can be further increased by disposing the plano-convex lens L1 such that an incidence surface (convex surface) of the plano-convex lens L1 is closer to the object side than the surface of the aperture plate 30. In addition, in this case, the arrangement position of the aperture plate 30 is a front side focal position of the composite optical system configured to include the plano-convex lens L1 and the biconvex positive lens L2, but the front side focal point is included in the plano-convex lens L1. Accordingly, in the case where parallel beams are incident from the image side, the beams are condensed into the plano-convex lens L1 and then become diverging beams that diverge from the condensing point. As a result, an angle of divergence is reduced on the incidence surface (convex surface) of the plano-convex lens L1 and the beams move toward the object side. Although an image seen from the object side of the condensing point (diverging light) is a virtual image, a surface on which the virtual image exists is a front side focal plane of the entire lens system. Thus, a configuration which is telecentric on the image side is obtained by disposing the aperture plate 30 on the front side focal plane.

Numeric data of this example is shown below. In the order from a side of the light emitter block 4 to a side of the photoconductor (image surface) 41, $r_1$, $r_2$, ... are radii of curvature (mm) of optical surfaces, $d_1$, $d_2$, ... are distances between optical surfaces (mm), $n_{d1}$, $n_{d2}$, ... are refractive indexes of d lines of transparent media, and $v_{d1}$, $v_{d2}$, ...are Abbe numbers of transparent media. In addition, $r_1$, $r_2$, ... also indicate optical surfaces. The optical surface $r_1$ is the light emitter block (object surface) 4, the optical surface $r_2$ is the opening 31 of the aperture plate 30, the optical surfaces $r_3$ and $r_4$ are object-side surface and image-side surface of the plano-convex lens L1, the optical surfaces $r_5$ and $r_6$ are object-side surface and image-side surface of the biconvex positive lens L2, and the optical surface $r_7$ is the photoconductor (image surface) 41. In addition, the object-side surface of the plano-convex lens L1 is an aspheric surface. Assuming that a distance from an optical axis is r, the aspheric shape is expressed by $cr^2/[1+\sqrt{1-(1+K)c^2r^2}]+Ar^4$. Here, c is a curvature (1/r) on the optical axis, K is a conic coefficient, and A is a fourth-order aspheric coefficient. In the following numeric data, $K_3$ and $A_3$ are conic coefficient and fourth-order aspheric coefficient of the object-side surface of the plano-convex lens L1, respectively.

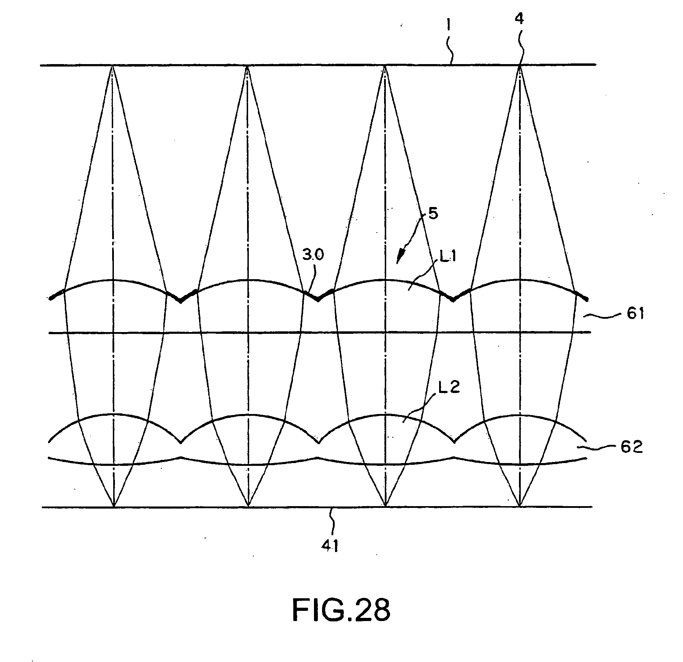

Moreover, in the third example, even in the case where it is difficult to form an aperture diaphragm inside the lens L1, the aperture 30 can be integrally formed on a surface around the convex surface of the incidence surface of the first positive lens L1. That is, as shown in Fig. 28, the aperture 30 can be integrally formed in the first microlens array 61 by selectively coating, for example, a light shielding film along a skirt portion (valley portion) between convex surfaces of the incidence surface of the first positive lens L1 on the object side of the first microlens array 61 in the lens array (Figs. 16, 17, and 24) of the microlens 5 formed by combination of the first microlens array 61 and the second microlens array 62. In addition, this example is more ideal in a point that the distance between the rear side principal plane of the first positive lens L1 and the front side principal plane of the second positive lens L2 can be made as large as possible and accordingly, an angle of view can be made smaller.

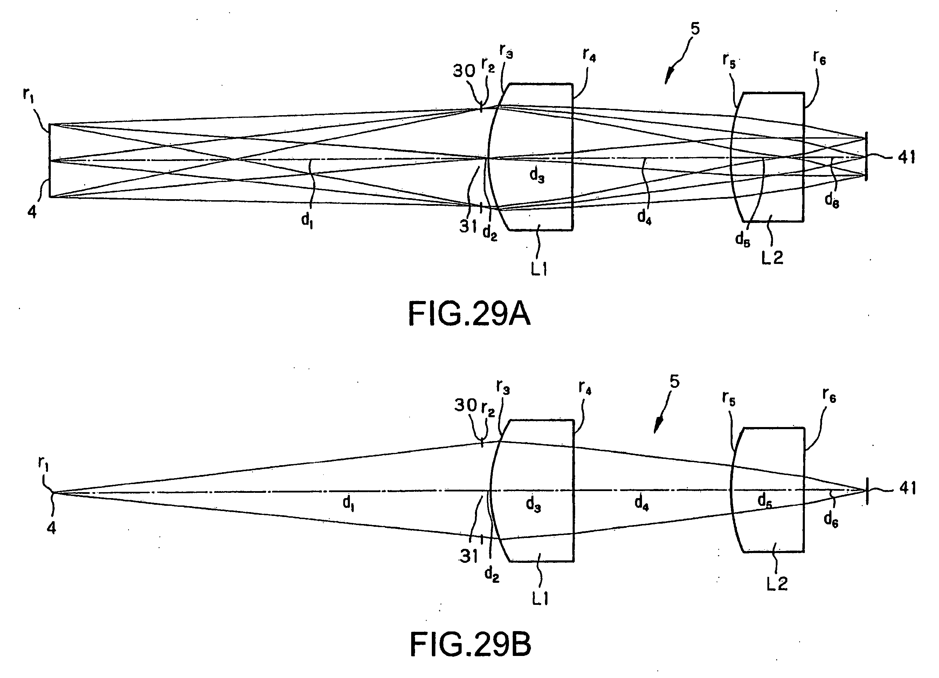

Figs. 29A and 29B are cross-sectional views taken along the main scanning direction and the sub-scanning direction illustrating an optical system corresponding to one microlens 5 of the fourth example. This is an example of the microlens 5 where a glass substrate is not disposed on the emission side of the light-emitting element 2, the microlens 5 is a composite lens system configured to include the plano-convex lens L1 and the plano-convex lens L2, the aperture plate 30 is disposed at the object side (front side) focal point of the composite lens system configured to include the plano-convex lens L1 and the plano-convex lens L2 so that the image side is telecentric, and an object-side convex surface of the plano-convex lens L1 is positioned to be slightly distant from the aperture plate 30 toward the object side.

Like this example (including the third example), in the invention, the surface apex of the object-side surface of the first positive lens L1 matches the object-side focal point of the composite lens system configured to include the first positive lens L1 and the second positive lens L2. In addition, even if the surface apex of the object-side surface of the first positive lens L1 is positioned in the neighborhood of the object-side focal point of the composite lens system, the shading phenomenon in which a decrease in the peripheral light amount becomes large according to the fourth power of cosine rule. As a result, the concentration unevenness of the imaging spots 8 on the light-emitting element row disposed in the line shape in the light emitter array 1 becomes difficult to occur.

Furthermore, like this example, by making the image-side surface of the second positive lens L2 flat, the entire image-side surface of the second microlens array 62 that forms the lens array of the microlens 5 can be made as a flat surface. Accordingly, for example, even if toner of a developer disperses to adhere to the flat surface of the microlens array when the microlens array is used as a microlens array of a line head of an image forming apparatus, the toner can be simply cleaned. As a result, the cleaning efficiency is improved.

Numeric data of this example is shown below. In the order from a side of the light emitter block 4 to a side of the photoconductor (image surface) 41, $r_1$, $r_2$, ... are radii of curvature (mm) of optical surfaces, $d_1$, $d_2$, ... are distances between optical surfaces (mm), $n_{d1}$, $n_{d2}$, ... are refractive indexes of d lines of transparent media, and $v_{d1}$, $v_{d2}$, ...are Abbe numbers of transparent media. In addition, $r_1$, $r_2$, ... also indicate optical surfaces. The optical surface $r_1$ is the light emitter block (object surface) 4, the optical surface $r_2$ is the opening 31 of the aperture plate 30, the optical surfaces $r_3$ and $r_4$ are object-side surface and image-side surface of the plano-convex lens L1, the optical surfaces $r_5$ and $r_6$ are object-side surface and image-side surface of the plano-convex lens L2, and the optical surface $r_7$ is the photoconductor (image surface) 41. In addition, both the object-side surfaces of the plano-convex lens L1 and plano-convex lens L2 are aspheric surfaces. Assuming that a distance from an optical axis is r, the aspheric shape is expressed by $cr^2/[1+\sqrt{1-(1+K)c^2r^2}]+Ar^4$. Here, c is a curvature (1/r) on the optical axis, K is a conic coefficient, and A is a fourth-order aspheric coefficient. In the following numeric data, $K_3$ and $A_3$ are conic coefficient and fourth-order aspheric coefficient of the object-side surface of the plano-convex lens L1, respectively, and $K_5$ and $A_5$ are conic coefficient and fourth-order aspheric coefficient of the object-side surface of the plano-convex lens L2, respectively.

First example

$r_1$ = ∞ (object side)
$d_1$ = 6.6460
$r_2$ = ∞ (aperture)
$d_2$ = 0.0000
$r_3$ = 3.4613 (aspheric surface)
$d_3$ = 1.0000
$n_{d1}$ = 1.5168
$v_{d1}$ = 64.2
$K_3$ = 0.0
$A_3$ = -0.0195
$r_4$ = -3.4613
$d_4$ = 2.4564
$r_5$ = 3.3896
$d_5$ = 1.0000
$n_{d2}$ = 1.5168

$v_{d2}$ = 64.2
$r_6$ = -3.3896
$d_6$ = 1.5000
$r_7$ = ∞ (image side)
Used wavelength 632.5 nm
Focal distance of a first lens 3.5333 mm
Focal distance of a second lens 3.4639 mm
Imaging spot group width (total width) 0.4 mm
Distance from a rear side principal plane of a first lens to a front side principal plane of a second lens 3.1512 mm
Maximum angle of view 3.608°

Second example

$r_1$ = ∞ (object side)
$d_1$ = 6.9201
$r_2$ = ∞ (aperture)
$d_2$ = 0.0000
$r_3$ = 1.8200 (aspheric surface)
$d_3$ = 1.0000
$n_{d1}$ = 1.5168
$v_{d1}$ = 64.2
$K_3$ = 0.0
$A_3$ = -0.03493
$r_4$ = ∞
$d_4$ = 2.4564
$r_5$ = 3.3896
$d_5$ = 1.0000
$n_{d2}$ = 1.5168
$v_{d2}$ = 64.2
$r_6$ = -3.3896
$d_6$ = 1.5000
$r_7$ = ∞ (image side)
Used wavelength 632.5 nm
Focal distance of a first lens 3.5333 mm
Focal distance of a second lens 3.4639 mm
Imaging spot group width (total width) 0.4 mm
Distance from a rear side principal plane of a first lens to a front side principal plane of a second lens 3.4639 mm
Maximum angle of view 3.308°

Third example

$r_1$ = ∞ (object side)
$d_1$ = 7.0578
$r_2$ = ∞ (aperture)
$d_2$ = -0.1300
$r_3$ = 1.8200 (aspheric surface)
$d_3$ = 1.0000
$n_{d1}$ = 1.5168
$v_{d1}$ = 64.2
$K_3$ = 0.0
$A_3$ = -0.0420
$r_4$ = ∞
$d_4$ = 2.5499
$r_5$ = 3.3896

$d_5 = 1.0000$
$n_{d2} = 1.5168$
$v_{d2} = 64.2$
$r_6 = -3.3896$
$d_6 = 1.5000$
$r_7 = \infty$ (image side)
Used wavelength 632.5 nm
Focal distance of a first lens 3.5333 mm
Focal distance of a second lens 3.4639 mm
Imaging spot group width (total width) 0.4 mm
Distance from a rear side principal plane of a first lens to a front side principal plane of a second lens 3.5740 mm
Maximum angle of view 3.201˚

Fourth example

$r_1 = \infty$ (object side)
$d_1 = 5.1280$
$r_2 = \infty$ (aperture)
$d_2 = 0.1871$
$r_3 = 1.3472$ (aspheric surface)
$d_3 = 1.0000$
$n_{d1} = 1.5168$
$v_{d1} = 64.2$
$K_3 = 0.0000$
$A_3 = -0.04946$
$r_4 = \infty$
$d_4 = 1.9000$
$r_5 = 1.4225$ (aspheric surface)
$d_5 = 0.8500$
$n_{d2} = 1.5168$
$v_{d2} = 64.2$
$K_3 = 0.0000$
$A_3 = -0.1123$
$r_6 = \infty$
$d_6 = 0.7500$
$r_7 = \infty$ (image side)
Used wavelength 632.5 nm
Focal distance of a first lens 2.6154 mm
Focal distance of a second lens 2.7616 mm
Imaging spot group width (total width) 0.4 mm
Distance from a rear side principal plane of a first lens to a front side principal plane of a second lens 2.5600 mm
Maximum angle of view 4.46˚

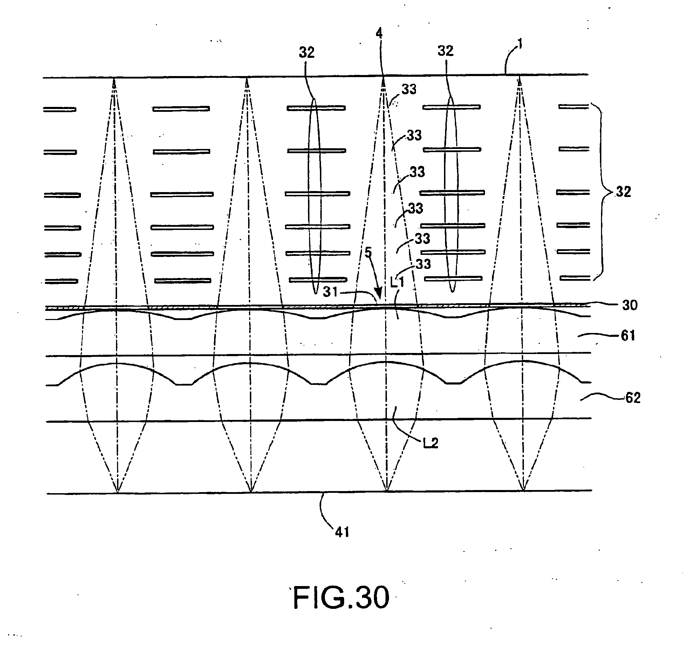

In such an optical system of the optical writing line head according to the embodiment of the invention, it is preferable to dispose one or more flare aperture plates between the light emitter array 1 and the aperture plate 30 in order to prevent that light from the light emitter block 4, which is incident on the specific microlens 5 of the microlens array, is incident on an optical path of the adjacent microlens 5 and as a result, the flare is generated. A cross-sectional view taken along the main scanning direction in one example of the case is shown in Fig. 30. In this case, six flare aperture plates 32 are disposed in parallel with the aperture plate 30 at distances therebetween, and an opening 33 corresponding to the opening 31 of the aperture plate 30 is provided in each flare aperture plate 32. The aperture diaphragm in the embodiment of the invention means the opening 31 of the aperture plate 30 but does not mean the opening 33 of the flare aperture plate 32.

While the line head and the image forming apparatus using the same according to the embodiment of the invention have been described on the basis of the principles and the examples thereof, the invention is not limited to the examples but various modifications thereof may also be made.

**Claims**

1.  A line head (101) comprising:

    a positive lens system (L1 + L2) having two lenses (L1, L2) with positive refractive power;
    a lens array (61, 62) in which a plurality of the positive lens systems are arrayed in a first direction;
    a light emitter array (1) in which a plurality of light-emitting elements (2) are arrayed on an object side of the lens array so as to correspond to the one positive lens system; and
    an aperture plate (30) that forms an aperture diaphragm at the position of an object-side focal point of the positive lens system,
    wherein the object-side surface of the object-side lens of the positive lens system is positioned within a range of ±10% of a total focal length of the positive lens system from the object-side focal point.

2.  The line head according to claim 1,
    wherein the lenses is configured to include a lens group.

3.  The line head according to claim 1 or 2,
    wherein an image-side surface of the object-side lens of the two lenses is a flat surface.

4.  The line head according to any one of the preceding claims,
    wherein at least the object-side surface of the object-side lens of the positive lens system is a convex surface, and
    a portion including a surface apex of the convex surface is disposed to be hidden in an opening of the aperture plate.

5.  The line head according to any one of the preceding claims,
    wherein the aperture plate is configured by integrally forming a light shielding member on an object-side surface of the lens array.

6.  The line head according to any one of the preceding claims,
    wherein at least an image-side surface of an image-side lens of the positive lens system is a flat surface.

7.  The line head according to any one of the preceding claims,
    wherein the shape of the aperture diaphragm is a shape of restricting at least the aperture diameter in the first direction.

8.  The line head according to any one of the preceding claims,
    wherein the plurality of light-emitting elements form a plurality of light-emitting element rows arrayed in a second direction perpendicular to the first direction.

9.  The line head according to any one of the preceding claims,
    wherein the plurality of light-emitting elements are arrayed to form light emitter groups at distances therebetween in the first direction.

10. The line head according to any one of the preceding claims,
    wherein the light-emitting elements are organic EL elements.

11. The line head according to any one of the preceding claims,
    wherein the light-emitting elements are LEDs.

12. An image forming apparatus comprising: at least two image forming stations each of which has a charging unit (42), the line head according to any one of the preceding claims, a developing unit (44), and a transfer unit (45, 66) disposed around an image carrier (41),
    wherein tandem-type image formation is performed by causing a transfer medium to pass through each station.

**Patentansprüche**

1.  Zeilenkopf (101), umfassend:

    ein Sammellinsensystem (L1 + L2), das zwei Linsen (L1, L2) mit positiver Brechungskraft aufweist;

eine Linsenanordnung (61, 62), in der mehrere der Sammellinsensysteme in einer ersten Richtung angeordnet sind;

eine Lichtemitteranordnung (1), in der mehrere Leuchtelemente (2) an einer Objektseite der Linsenanordnung so angeordnet sind, dass sie dem einen Sammellinsensystem entsprechen; und

eine Öffnungsplatte (30), die eine Öffnungsblende an der Stelle eines objektseitigen Fokus des Sammellinsensystems bildet, und

wobei die objektseitige Oberfläche der objektseitigen Linse des Sammellinsensystems innerhalb eines Bereichs von $\pm$10% einer Gesamtfokuslänge des Sammellinsensystems von dem objektseitigen Fokus angeordnet ist.

2.  Zeilenkopf nach Anspruch 1,
    bei dem die Linsen so aufgebaut sind, dass sie eine Linsengruppe beinhalten.

3.  Zeilenkopf nach Anspruch 1 oder 2,
    bei dem eine bildseitige Oberfläche der objektseitigen Linse der zwei Linsen eine ebene Oberfläche ist.

4.  Zeilenkopf nach einem der vorhergehenden Ansprüche,
    bei dem zumindest die objektseitige Oberfläche der objektseitigen Linse des Sammellinsensystems eine konvexe Oberfläche ist und
    ein Abschnitt, der einen Oberflächenscheitelpunkt der konvexen Oberfläche beinhaltet, so angeordnet ist, dass er in einer Öffnung der Öffnungsplatte verborgen ist.

5.  Zeilenkopf nach einem der vorhergehenden Ansprüche,
    bei dem die Öffnungsplatte durch einstückiges Ausbilden eines Lichtabschirmelements an einer objektseitigen Oberfläche der Linsenanordnung aufgebaut ist.

6.  Zeilenkopf nach einem der vorhergehenden Ansprüche,
    bei dem zumindest eine bildseitige Oberfläche einer bildseitigen Linse des Sammellinsensystems eine ebene Oberfläche ist.

7.  Zeilenkopf nach einem der vorhergehenden Ansprüche,
    bei dem die Form der Öffnungsblende eine Form ist, die zumindest den Öffnungsdurchmesser in der ersten Richtung beschränkt.

8.  Zeilenkopf nach einem der vorhergehenden Ansprüche,
    bei dem die mehreren Leuchtelemente mehrere Leuchtelementreihen bilden, die in einer zweiten Richtung senkrecht zu der ersten Richtung angeordnet sind.

9.  Zeilenkopf nach einem der vorhergehenden Ansprüche,
    bei dem die mehreren Leuchtelemente so angeordnet sind; dass sie Lichtemittergruppen mit Abständen dazwischen in der ersten Richtung bilden.

10. Zeilenkopf nach einem der vorhergehenden Ansprüche,
    bei dem die Leuchtelemente organische EL-Elemente sind.

11. Zeilenkopf nach einem der vorhergehenden Ansprüche,
    bei dem die Leuchtelemente LEDs sind.

12. Bilderzeugungsvorrichtung, umfassend: wenigstens zwei Bilderzeugungsstationen, die jeweils eine Ladeeinheit (42), den Zeilenkopf nach einem der vorhergehenden Ansprüche, eine Entwicklungseinheit (44) und eine um einen Bildträger (41) herum angeordnete Übertragungseinheit (45, 66) aufweisen,
    wobei eine Tandem-Bilderzeugung durchgeführt wird, indem bewirkt wird, dass ein Übertragungsmedium durch jede Station tritt.

**Revendications**

1.  Tête de ligne (101) comprenant :

EP 2 028 014 B1

un système de lentilles positives (L1+L2) ayant deux lentilles (L1, L2) avec une réfringence positive ;

un réseau de lentilles (61, 62) où une pluralité des systèmes de lentilles positives sont disposées en réseau dans une première direction ;

un réseau d'émetteurs de lumière (1) où une pluralité d'éléments d'émission de lumière (2) sont disposés en réseau sur un côté objet du réseau de lentilles de manière à correspondre au système de lentilles positives ; et

un obturateur d'ouverture (30) qui forme un diaphragme d'ouverture au niveau de la position d'un point focal côté objet du système de lentilles positives, et

où la surface côté objet des lentilles côté objet du système de lentilles positives est positionnée dans un périmètre de $\pm$ 10% d'une distance focale totale du système de lentilles positives par rapport au point focal côté objet.

2.  Tête de ligne selon la revendication 1, où les lentilles sont configurées pour inclure un groupe de lentilles.

3.  Tête de ligne selon la revendication 1 ou 2, où une surface côté image de la lentille côté objet des deux lentilles est une surface plane.

4.  Tête de ligne selon l'une quelconque des revendications précédentes, où au moins la surface côté objet de la lentille côté objet du système de lentilles positives est une surface convexe, et
une partie incluant un sommet de surface de la surface convexe est disposée de manière à être cachée dans une ouverture dans l'obturateur d'ouverture.

5.  Tête de ligne selon l'une quelconque des revendications précédentes, où l'obturateur d'ouverture est configuré en formant un élément de blindage de lumière intégralement sur une surface côté objet du réseau de lentilles.

6.  Tête de ligne selon l'une quelconque des revendications précédentes, où au moins une surface côté image d'une lentille côté image du système de lentilles positives est une surface plane.

7.  Tête de ligne selon l'une quelconque des revendications précédentes, où la forme du diaphragme d'ouverture est une forme destinée à restreindre au moins le diamètre d'ouverture dans la première direction.

8.  Tête de ligne selon l'une quelconque des revendications précédentes, où la pluralité d'éléments d'émission de lumière forme une pluralité de lignes d'éléments d'émission de lumière disposés dans une deuxième direction perpendiculaire à la première direction.

9.  Tête de ligne selon l'une quelconque des revendications précédentes, où la pluralité d'éléments d'émission de lumière sont disposés de manière à former des groupes d'émetteurs de lumière à des distances entre eux dans la première direction.

10. Tête de ligne selon l'une quelconque des revendications précédentes, où les éléments d'émission de lumière sont des éléments électroluminescents organiques.

11. Tête de ligne selon l'une quelconque des revendications précédentes, où les éléments d'émission de lumière sont des diodes électroluminescentes.

12. Appareil de formation d'image comprenant : au moins deux stations de formation d'image dont chacune a une unité de chargement (42), la tête de ligne selon l'une quelconque des revendications précédentes, une unité de développement (44), et une unité de transfert (45, 66) disposés autour d'un support d'image (41),
où une formation d'image de type tandem est effectuée en provoquant le passage du support de transfert à travers chaque station.

FIG. 1

FIG. 2

FIG. 3

FIG. 4

| ROW NUMBER \ PIXEL NUMBER | 1 | 2 | 3 | 4 | 5 | 6 | 7 | 8 | · · · |
|---|---|---|---|---|---|---|---|---|---|
| 1 | | | | | | | | | · · · |
| 2 | | | | | | | | | · · · |
| 3 | | | | | | | | | · · · |

10

▨ · · · READ FIRST

▨ · · · READ AFTER TIME T

# FIG. 5

SUB-SCANNING DIRECTION

① ② ③ ④ ⑤ ⑥ ⑦ ⑧

8

MAIN SCANNING DIRECTION

# FIG. 6

FIG. 7

EP 2 028 014 B1

FIG. 8

FIG. 9

MAIN SCANNING DIRECTION

FIG.10

FIG.11

FIG.12A

FIG.12B

## FIG.13

FIG.14

OBJECT-SIDE PRINCIPAL
PLANE OF OPTICAL SYSTEM

$S_0 (-)$

f total

5 LENS SYSTEM

$Wi/2$

ANGLE OF
VIEW $\omega$

$-Wo/2$

11 APERTURE

$d o$

$d 1$

$d 2$

1 LIGHT SOURCE SURFACE
(OBJECT SURFACE)

L1 FIRST LENS

FOCAL LENGTH f1

L2 SECOND LENS

FOCAL LENGTH f2

41 PHOTOCONDUCTOR
SURFACE
(IMAGE SURFACE)

5 LENS SYSTEM

11 APERTURE

$f\ 2$

ANGLE OF
VIEW $\omega$

$d\ 0$

$d\ 1$

$d\ 2$

1 LIGHT SOURCE SURFACE
(OBJECT SURFACE)

L1 FIRST LENS

FOCAL LENGTH f1

L2 SECOND LENS

FOCAL LENGTH f2

41 PHOTOCONDUCTOR
SURFACE
(IMAGE SURFACE)

**FIG.15**

EP 2 028 014 B1

FIG.16

FIG.17

EP 2 028 014 B1

FIG.18

SUB-SCANNING DIRECTION

MAIN SCANNING DIRECTION

FIG.19

FIG.20

FIG.21

FIG.22

MAIN SCANNING DIRECTION

SUB-SCANNING DIRECTION

FIG.23

MAIN SCANNING DIRECTION

SUB-SCANNING DIRECTION

FIG.24

FIG.25A

FIG.25B

EP 2 028 014 B1

EP 2 028 014 B1

FIG.26A

FIG.26B

43

FIG.27A

FIG.27B

EP 2 028 014 B1

FIG.28

FIG.29A

FIG.29B

EP 2 028 014 B1

FIG.30

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004546 A
- JP 6344596 A
- JP 6278314 A
- US 5539444 A